# EUROPEAN PATENT APPLICATION

(11) **EP 4 443 858 A1**
(43) Date of publication of application: **09.10.2024**
(21) Application number: 22914209.6
(22) Date of filing: 13.12.2022
(51) Int. Cl.: H04M 1/725, G06F 3/0481

(54) **METHOD FOR PUSHING CONTACT PERSON INFORMATION, TERMINAL DEVICE, AND STORAGE MEDIUM**

(30) Priority: 31.12.2021 CN 202111682737
(71) Applicant: Petal Cloud Technology Co., Ltd., Dongguan, Guangdong 523799 (CN)
(72) Inventor: FAN, Ruiqun, Shenzhen, Guangdong 518129 (CN)
(74) Representative: Isarpatent
(86) International application number: PCT/CN2022/138534
(87) International publication number: WO 2023/124954

(57) **Abstract**

This application provides a method for pushing contact information, a terminal device, and a storage medium, and relates to the field of terminal technologies. The method is applied to a first terminal device, and the method includes: displaying a first interface when detecting a first operation performed on a first application, where the first operation is used to edit contact information, and the first interface includes a first input box; and displaying a second interface when detecting a second operation performed on the first interface, where the second interface includes a first information set, the first information set includes contact information from at least one application, and an information type of the contact information is an information type corresponding to the first input box. According to the technical solutions provided in this application, efficiency of pushing contact information to a user and adding the contact information is improved, and user experience is improved.

## Description

This application claims priority to Chinese Patent Application No. 202111682737. 2, filed with the China National Intellectual Property Administration on December 31, 2021 and entitled "METHOD FOR PUSHING CONTACT INFORMATION, TERMINAL DEVICE, AND STORAGE MEDIUM", which is incorporated herein by reference in its entirety.

### TECHNICAL FIELD

This application relates to the field of terminal technologies, and in particular, to a method for pushing contact information, a terminal device, and a storage medium.

### BACKGROUND

With the development of terminal technologies, terminal devices such as mobile phones are increasingly popular. Contact information maintenance is an important function of a terminal device. The terminal device may display a contact editing interface, and receive, through the contact editing interface, a contact name, a phone number, and other contact information that are manually entered by a user. However, this manner is relatively cumbersome. Therefore, a method for pushing contact information is urgently required.

In the conventional technology, a terminal device may display a contact editing interface when receiving a tapping operation of a user for a piece of contact information, and fill the contact information in an input box. This is equivalent to pushing the contact information pre-selected by the user to the user on the contact editing interface. However, in this push manner, the user still needs to accurately select the contact information in advance. If the user selects incorrect contact information, the user has to exit the contact editing interface and reselect correct contact information, or manually input the correct contact information on the contact editing interface. Consequently, the push manner has great limitations, and also makes contact information editing cumbersome, causing poor user experience.

### SUMMARY

In view of this, this application provides a method for pushing contact information, a terminal device, and a storage medium, to improve efficiency of pushing contact information to a user and adding the contact information, and improve user experience.

To achieve the foregoing objective, according to a first aspect, an embodiment of this application provides a method for pushing contact information. The method is applied to a first terminal device, and the method includes:
displaying a first interface when detecting a first operation performed on a first application, where the first operation is used to edit contact information, and the first interface includes a first input box; and
displaying a second interface when detecting a second operation performed on the first interface, where the second interface includes a first information set, the first information set includes contact information from at least one application, and an information type of the contact information is an information type corresponding to the first input box.

It should be noted that the first interface may be an interface of a second application, that is, the first operation may be used to edit contact information in the second application. The second application and the first application may be a same application, or may be different applications. The at least one application may include at least one of the first application and the second application. The first input box may be any input box on the first interface.

In this embodiment of this application, when detecting the first operation performed on the first application and used to edit the contact information in the second application, the first terminal device may display the first interface including the first input box, and when detecting the second operation performed on the first interface, the first terminal device may display the second interface including the first information set. Because the contact information included in the first information set comes from at least one application, and an information type of the contact information is corresponding to the first input box, a user can select required contact information more conveniently and quickly for adding, thereby simplifying operations of pushing the contact information to the user and adding the contact information by the user, improving efficiency of pushing the contact information to the user and adding the contact information, and improving user experience.

The at least one application may include any application in the first terminal device. When a quantity of the at least one application is larger, the first terminal device obtains more data sources of the first information set, and a possibility of pushing contact information that meets a user requirement to the user is higher. For example, at a moment, the user accidentally opens an application that is seldom used, so that application data of the application includes one piece of contact information. At another moment, the user thinks that the contact information that has been used is relatively important, and expects to add the contact information. However, at a current moment, the user may only remember that the contact information has been used or seen in the first terminal device, but does not know that the contact information is used or seen in which application, and does not know how to obtain the contact information. In this embodiment of this application, the first terminal device may obtain the contact information from the application data and push the contact information to the user. For the user, difficulty in obtaining the contact information is greatly reduced, and efficiency of pushing the contact information and user experience are improved.

Optionally, the first operation is an operation of updating an added contact, and the first input box on the first interface includes first contact information.

Optionally, the second interface further includes the first contact information and a mark corresponding to the first contact information. Therefore, the user distinguishes contact information filled in the first input box from other pushed contact information, so that the user selects contact information that needs to be added, and user experience is improved.

Optionally, the second operation is an operation of adding contact information, the first information set includes second contact information, and the method further includes:
displaying a third interface when detecting a third operation performed on the second interface, where the third interface includes the first input box, the first input box includes the second contact information, and the third operation is an operation of selecting the second contact information.

Optionally, the third operation is an operation of selecting the second contact information and third contact information, the third interface further includes a second input box, an information type corresponding to the second input box is the same as that corresponding to the first input box, and the second input box includes the third contact information. That is, the user may add contact information of a same information type in batches for a contact by using the third operation, thereby improving efficiency of adding the contact information.

If the first input box on the first interface is filled with the first contact information, the first terminal device may replace the first contact information in the first input box with the second contact information, to obtain the third interface, so that the user can update the contact information more conveniently and quickly. In this way, even if the user selects incorrect contact information before, the user does not need to exit a current contact editing interface to reselect contact information, thereby greatly reducing interaction with the user and improving efficiency of adding the contact information, and improving user experience. Alternatively, in some other embodiments, if the first input box on the first interface is already filled with the first contact information, the first terminal device may create the second input box of a same information type as the first input box, and fill the second contact information in the second input box.

Optionally, the first information set includes at least a part of contact information in a second information set, an information type of the contact information included in the second information set is the information type corresponding to the first input box, and before the displaying a second interface, the method further includes:
obtaining the second information set from a preset application programming interface (application programming interface, API) of each application.

Optionally, the first terminal device may also obtain application data from a preset API of each application, and then obtain contact information from the application data.

When the first terminal device obtains the contact information from the application, coupling between applications can be reduced, and application data leakage can be reduced. When the first terminal device obtains the application data from the application, and then obtains the contact information from the application data, a manner of obtaining the contact information may be more flexible. This helps improve accuracy and reliability of obtaining the contact information.

Optionally, the first information set includes contact information that is not added.

When obtaining the contact information from the at least one application, the first terminal device may further determine whether the obtained contact information is added contact information, and if yes, ignore the contact information; otherwise, retain the contact information, so that the first information set includes only the contact information that is not added, thereby improving accuracy of pushing the contact information.

Optionally, the first information set includes at least a part of contact information in a third information set, an information type of the contact information included in the third information set is the information type corresponding to the first input box, and before the displaying a second interface, the method further includes:
establishing a connection to a second terminal device;
sending a contact information obtaining request to the second terminal device, where the contact information request carries the information type corresponding to the first input box; and

receiving the third information set sent by the second terminal device.

Optionally, after obtaining the third information set from the second terminal device, the first terminal device may delete contact information that is currently added by the first terminal device and that is included in the third information set, to obtain a new third information set.

Optionally, the first information set may include the at least a part of contact information in the second information set and the at least a part of contact information in the third information set.

The first terminal device may obtain the contact information from another terminal device other than the first terminal device. When a user has a plurality of terminal devices, the plurality of terminal devices may not be installed with a same application, and correspondingly, different terminal devices may include different contact information. Therefore, the terminal device may obtain the contact information in a cross-device manner. This can further increase a data source of the contact information, and reduce complexity and efficiency of obtaining the contact information by the user.

Optionally, the second interface further includes at least one of source information, time information, and frequency information corresponding to each piece of contact information included in the first information set, the source information indicates an application and/or a device to which the contact information belongs, the time information indicates a corresponding time that is of the contact information and that is in application data of the application to which the contact information belongs, and the frequency information indicates a frequency at which the contact information appears in the application data of the application to which the contact information belongs.

Optionally, before the displaying a second interface, the method further includes:
grouping, based on the source information, contact information included in the first information set.

The second interface includes the grouped first information set.

Optionally, before the displaying a second interface, the method further includes:
sorting, based on at least one of the time information and the frequency information, the contact information included in the first information set.

The second interface includes the sorted first information set.

Optionally, the first terminal device may first group the first information set based on the source information corresponding to the contact information, and then sort the grouped first information set based on the time information and the frequency information, to obtain the grouped and sorted first information set.

The contact information included in the first information set is grouped based on the source information corresponding to each piece of contact information included in the first information set, so that contact information corresponding to same source information in the grouped first information set is in a same group. The contact information included in the first information set is sorted based on at least one of the time information and the frequency information corresponding to each piece of contact information, so that the contact information in the sorted first information set is sorted in a specific order. Correspondingly, the second interface may include the grouped first information set and/or the sorted first information set, to more intuitively present a source and a usage status of the contact information to the user, so as to select the contact information more quickly and accurately, thereby improving efficiency of editing a contact by the user and user experience.

Optionally, the information type of the first input box is a phone number, and the at least one application includes at least one of a phone application, a clipboard application, and a memo application.

Alternatively, the information type of the first input box is an email address, and the at least one application includes at least one of an email box, a clipboard application, and a memo application.

Alternatively, the information type of the first input box is a commemorative date, and the at least one application includes at least one of a calendar application, a clipboard application, and a memo application.

Optionally, the second interface includes a push button corresponding to the first input box, and the first terminal device may receive the second operation based on the push button. The push button may be set in the first input box, or may be set outside the first input box, and a shape of the push button may be an arrow, a circle, or an inverted triangle.

Optionally, to make a manner of obtaining the contact information more flexible, so that the user can perform personalized configuration on the manner of obtaining the contact information, and to further improve accuracy of pushing the contact information, the first terminal may display a fourth interface to the user. The fourth interface may include at least one configuration option indicating a push rule for pushing the contact information. When detecting a fifth operation corresponding to any configuration option, the first terminal device configures the configuration option. Correspondingly, the first terminal device may obtain and push the contact information based on the push rule indicated by the at least one configuration option.

Optionally, the at least one configuration option may include one of an information source option, a time interval option, and a frequency option.

Optionally, the first terminal device may add the first information set based on the first interface, to generate the second interface. In other words, in addition to the first information set, the second interface may further include a part of display content of the first interface. For example, the terminal device may add the first information set to a display area adjacent to the first input box, to obtain the second interface. In other words, on the second interface, an area in which the first information set is located may be adjacent to the first input box. Optionally, the first terminal may jump from the first interface to the second interface. In other words, the second interface may include the first information set, but does not include any display content on the first interface.

Optionally, the second interface may include at least one display control option. When receiving a sixth operation based on any display control option, the first terminal device updates, on the second interface, displayed contact information or updates a manner of displaying the contact information. That is, the first information set can be displayed based on a manner corresponding to a user operation, so that the user can view or select contact information, thereby improving user experience.

According to a second aspect, an embodiment of this application provides an apparatus for pushing contact information. The apparatus is included in a first terminal device, and the apparatus has a function of implementing behavior of the first terminal device in the foregoing aspects and the possible implementations of the foregoing aspects. The function may be implemented by hardware, or may be implemented by hardware executing corresponding software. The hardware or the software includes one or more modules or units corresponding to the foregoing functions, for example, a transceiver module or unit, a processing module or unit, and an obtaining module or unit.

According to a third aspect, an embodiment of this application provides a terminal device, including a memory and a processor. The memory is configured to store a computer program; and when invoking the computer program, the processor is configured to perform the method according to any implementation of the first aspect.

According to a fourth aspect, an embodiment of this application provides another chip system. The chip system includes a processor, and the processor is coupled to a memory. The processor executes a computer program stored in the memory, to implement the method according to any implementation of the first aspect.

The chip system may be a single chip or a chip module including a plurality of chips.

According to a fifth aspect, an embodiment of this application provides a computer-readable storage medium, storing a computer program. When the computer program is executed by a processor, the method according to any implementation of the first aspect is implemented.

According to a sixth aspect, an embodiment of this application provides a computer program product. When the computer program product is run on a terminal device, the terminal device performs the method according to any implementation of the first aspect.

It may be understood that, for beneficial effects of the second aspect to the sixth aspect, refer to related descriptions in the first aspect. Details are not described herein.

### BRIEF DESCRIPTION OF DRAWINGS

FIG. 1 is a schematic diagram of a structure of a terminal device according to an embodiment of this application;
FIG. 2 is a schematic diagram of a call record interface according to an embodiment of this application;
FIG. 3 is a schematic diagram of a number details interface according to an embodiment of this application;
FIG. 4 is a schematic diagram of a contact editing interface according to an embodiment of this application;
FIG. 5 is a schematic diagram of a contact main interface according to an embodiment of this application;
FIG. 6 is a schematic diagram of another contact editing interface according to an embodiment of this application;
FIG. 7 is a schematic diagram of a contact information push interface according to an embodiment of this application;
FIG. 8 is a schematic diagram of another contact editing interface according to an embodiment of this application;
FIG. 9 is a schematic diagram of another contact editing interface according to an embodiment of this application;
FIG. 10 is a schematic diagram of another contact information push interface according to an embodiment of this application;
FIG. 11 is a schematic diagram of another contact information push interface according to an embodiment of this application;
FIG. 12 is a schematic diagram of another contact information push interface according to an embodiment of this application;
FIG. 13 is a schematic diagram of another contact editing interface according to an embodiment of this application;
FIG. 14 is a schematic diagram of another contact editing interface according to an embodiment of this application;
FIG. 15 is a schematic diagram of another contact information push interface according to an embodiment of this application;
FIG. 16 is a schematic diagram of another contact information push interface according to an embodiment of this application;
FIG. 17 is a schematic diagram of another contact editing interface according to an embodiment of this application;
FIG. 18 is a schematic diagram of another contact editing interface according to an embodiment of this application;
FIG. 19 is a schematic diagram of a memo interface according to an embodiment of this application;
FIG. 20 is a schematic diagram of a shortcut jump interface according to an embodiment of this application;
FIG. 21 is a schematic diagram of another contact editing interface according to an embodiment of this application;
FIG. 22 is a schematic diagram of another contact information push interface according to an embodiment of this application;
FIG. 23 is a schematic diagram of another contact information push interface according to an embodiment of this application;
FIG. 24 is a schematic flowchart of a method for pushing a contact according to an embodiment of this application;
FIG. 25 is a schematic diagram of a push configuration interface according to an embodiment of this application;
FIG. 26 is a schematic flowchart of a method for obtaining a first information set according to an embodiment of this application; and
FIG. 27 is a schematic diagram of a structure of another terminal device according to an embodiment of this application.

### DESCRIPTION OF EMBODIMENTS

A method for pushing contact information provided in embodiments of this application may be applied to a terminal device, for example, a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). A specific type of the terminal device is not limited in embodiments of this application.

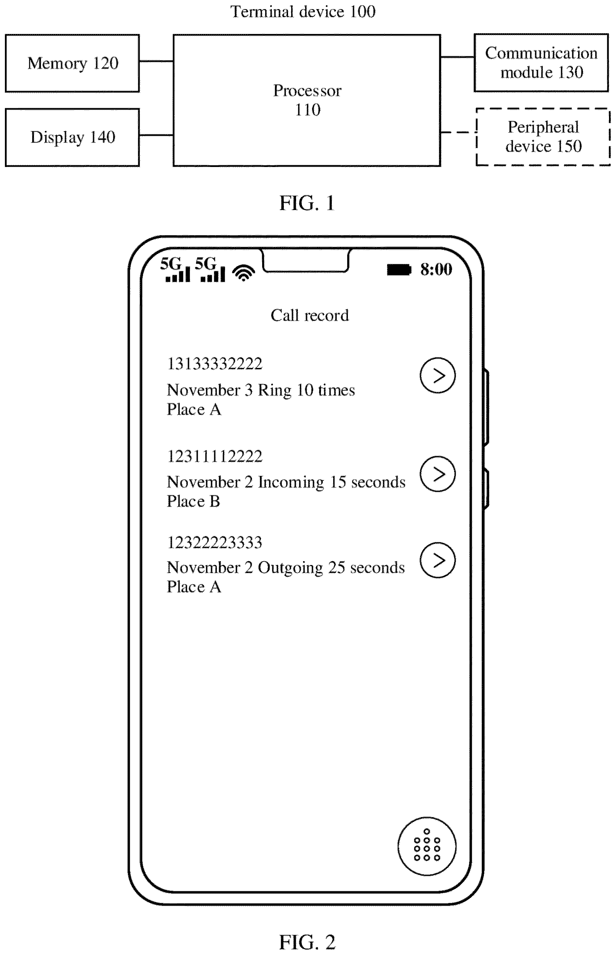

FIG. 1 is a schematic diagram of a structure of a terminal device 100 according to an embodiment of this application. The terminal device 100 may include a processor 110, a memory 120, a communication module 130, a display 140, and the like.

The processor 110 may include one or more processing units. The memory 120 is configured to store program code and data. In this embodiment of this application, the processor 110 may execute computer-executable instructions stored in the memory 120, to control and manage an action of the terminal device 100.

The communication module 130 may be used for communication between internal modules of the terminal device 100, communication between the terminal device 100 and another external terminal device, or the like. For example, if the terminal device 100 communicates with another terminal device in a wired connection manner, the communication module 130 may include an interface, for example, a USB interface. The USB interface may be an interface that conforms to the USB standard specification, and may be specifically a mini USB interface, a micro USB interface, a USB Type-C interface, or the like. The USB interface may be used to connect to the charger to charge the terminal device 100, or may be used to transmit data between the terminal device 100 and a peripheral device. The USB interface may alternatively be configured to connect to a headset, to play audio by using the headset. The interface may alternatively be used to connect to another terminal device, for example, an AR device.

Alternatively, the communication module 130 may include an audio component, a radio frequency circuit, a Bluetooth chip, a wireless fidelity (wireless fidelity, Wi-Fi) chip, a near-field wireless (near-field communication, NFC) communication module, and the like, and may implement interaction between the terminal device 100 and another terminal device in various manners.

The terminal device 100 may further include a display 140. The display 140 may display an image, a video, or the like on a human-computer interaction interface. In some embodiments, the display 140 may be a touchscreen, so as to receive a user operation. For example, the display 140 may display a contact editing interface and receive, based on the contact boundary interface, contact information submitted by a user, or display a call record interface and receive, based on the call record interface, a call record selected by the user, or display a number details interface to display, to the user, detailed information corresponding to a phone number.

Optionally, the terminal device 100 may further include a peripheral device 150 such as a mouse, a keyboard, a speaker, or a microphone.

It should be understood that, in addition to the various components or modules shown in FIG. 1, the structure of the terminal device 100 is not specifically limited in this embodiment of this application. In some other embodiments of this application, the terminal device 100 may include more or fewer components than those shown in the figure, or combine some components, or split some components, or have different component arrangements. The components shown in the figure may be implemented by hardware, software, or a combination of software and hardware.

To facilitate understanding of the technical solutions in embodiments of this application, the following first describes application scenarios in embodiments of this application.

Contact information maintenance is an important function of a terminal device. The terminal device may display a contact editing interface, and receive, through the contact editing interface, contact information such as a contact name and a phone number that is manually entered by a user. However, this manner is relatively cumbersome, and therefore a method for pushing contact information is urgently required.

In some embodiments, the terminal device may display the contact editing interface when a piece of contact information receives a tapping operation of the user, and fill the contact information in an input box. This is equivalent to pushing contact information pre-selected by the user to the user on the contact editing interface. However, in this push manner, the user still needs to accurately select the contact information in advance. If the user selects incorrect contact information, the user has to exit the contact editing interface and reselect correct contact information, or manually input the correct contact information on the contact editing interface. Therefore, the push manner has great limitations, and also makes contact information editing cumbersome, causing poor user experience.

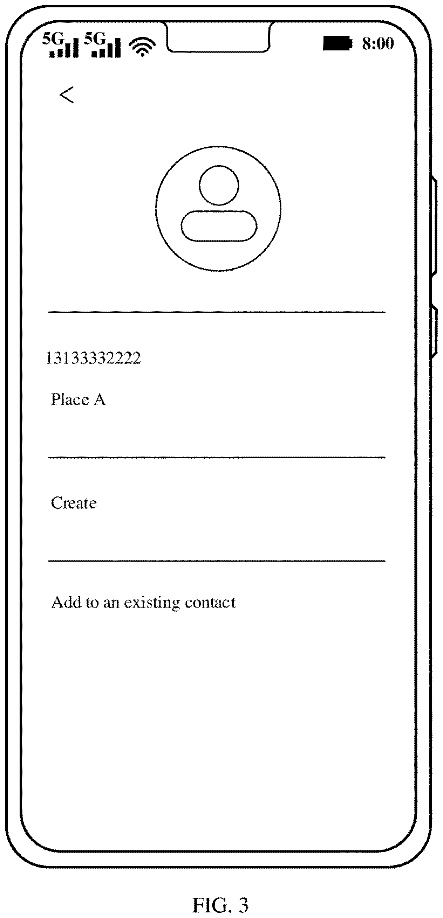

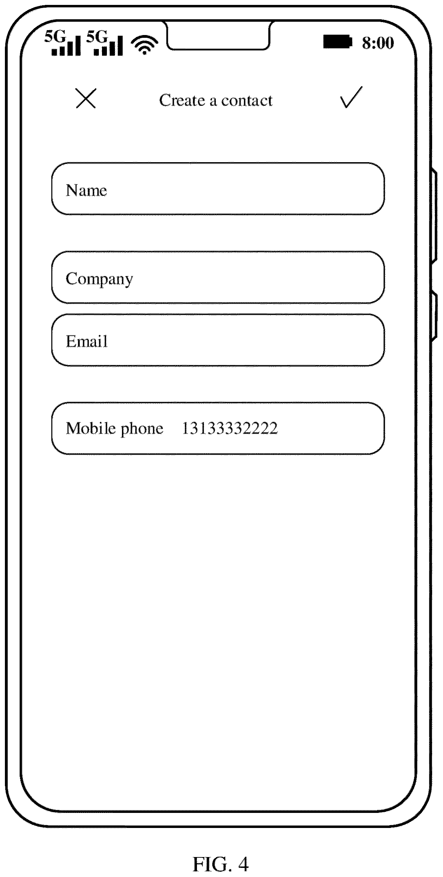

A phone number is used as an example. A call record interface displayed by the terminal device is shown in FIG. 2. The call record interface includes a plurality of phone numbers, and a details menu button is correspondingly set on a right side of each phone number. When the terminal device receives, based on a details menu button corresponding to 13133332222, a tapping operation of the user, a number details interface corresponding to 13133332222 is displayed, as shown in FIG. 3. The number details interface includes a "New" option. If the terminal device receives a tapping operation of the user based on the "New" option, a contact editing interface is displayed, as shown in FIG. 4. The contact editing interface includes four input boxes such as "Name", "Company", "Email", and "Mobile phone". The "Name" input box is used to receive a contact name submitted by the user, the "Company" input box is used to receive a company name of a company in which a contact submitted by the user is located, the "Email" input box is used to receive an email address of an email box of the contact submitted by the user, and the "Mobile phone" input box is used to receive a phone number of the contact submitted by the user. In addition, as shown in FIG. 4, on the current contact editing interface, the number 13133332222 selected by the user on the call record interface in FIG. 2 is filled in the "mobile phone" input box.

It can be learned that the terminal device can push a phone number previously selected by the user to the user only through interaction between the user and the terminal device on a plurality of interfaces such as FIG. 2 to FIG. 4. If the user finds, on the contact editing interface shown in FIG. 4, that an incorrect phone number is previously selected, the user can only return to the call record interface shown in FIG. 2 to reselect a correct phone number, or manually enter a correct phone number in the "Mobile phone" income box on the contact editing interface shown in FIG. 4. Apparently, this push manner has great limitations, and also makes contact information editing cumbersome, causing poor user experience.

To resolve at least some of the foregoing technical problems, an embodiment of this application provides a method for pushing contact information. In this embodiment of this application, when detecting a first operation performed on a first application and used to edit contact information, a first terminal device may display a first interface including a first input box. When detecting a second operation performed on the first interface, the first terminal device may display a second interface including a first information set. Because contact information included in the first information set comes from at least one application, and an information type of the contact information is corresponding to the first input box, a user can select required contact information more conveniently and quickly for adding, thereby simplifying operations of pushing the contact information to the user and adding the contact information by the user, improving efficiency of pushing the contact information to the user and adding the contact information, and improving user experience.

Specific embodiments are used below to describe in detail the technical solutions of this application. It should be noted that a first terminal device and a second terminal device in the following may be terminal devices shown in FIG. 1. The following several specific embodiments may be combined with each other, and a same or similar concept or process may not be described repeatedly in some embodiments.

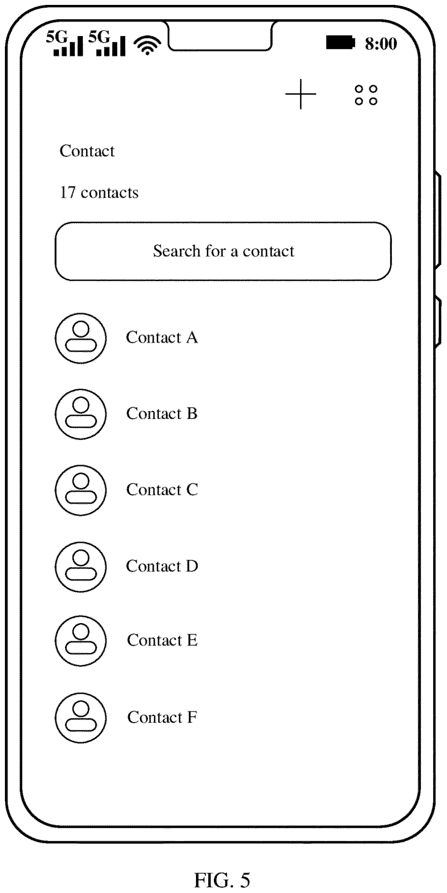

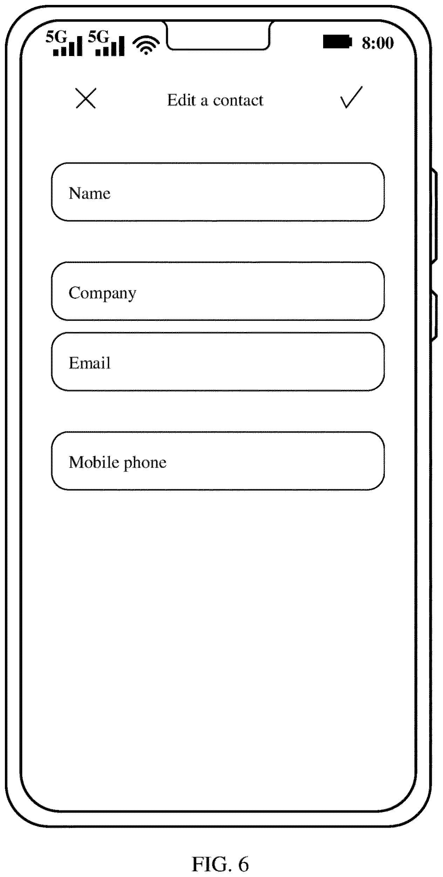

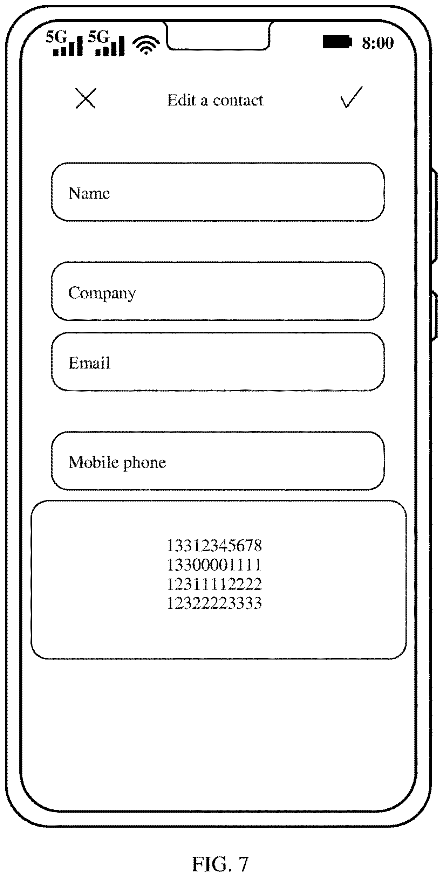

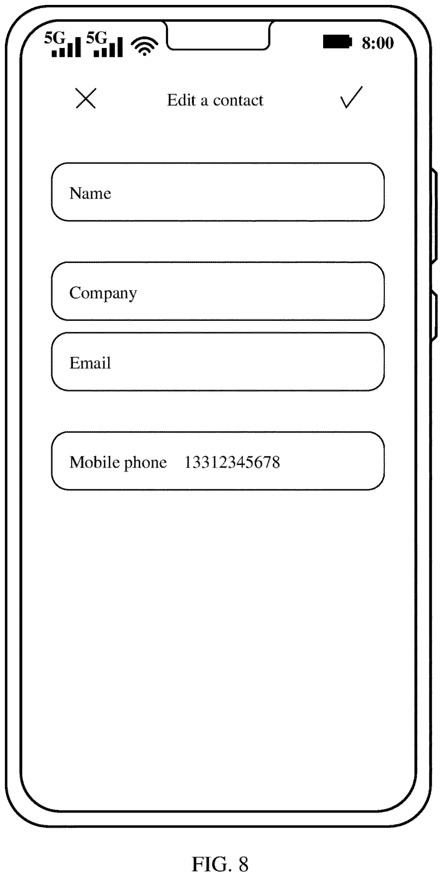

Refer to FIG. 5 to FIG. 8 in sequence. A method for adding contact information is provided, to add new contact information when a contact is created. The first terminal device may display a contact main interface shown in FIG. 5, and the upper right corner of the contact main interface includes a contact creation entrance "+". When receiving a tapping operation of the user based on "+", the first terminal device displays a contact editing interface shown in FIG. 6. The contact editing interface includes four blank input boxes corresponding to four information types such as "Name", "Company" (that is, a company name), "Email" (that is, an email address), and "Mobile phone" (that is, a phone number). When the first terminal device receives a tapping operation for the "Mobile phone" input box, the first terminal device may add a first information set based on the contact editing interface shown in FIG. 6, display a contact information push interface shown in FIG. 7, and display, below the "Mobile phone" input box included on the contact information push interface, four phone numbers pushed to the user. When receiving a tapping operation based on the phone number 13312345678, the first terminal device fills the phone number in the "Mobile phone" input box on the contact editing interface shown in FIG. 6, so as to display a contact editing interface shown in FIG. 8.

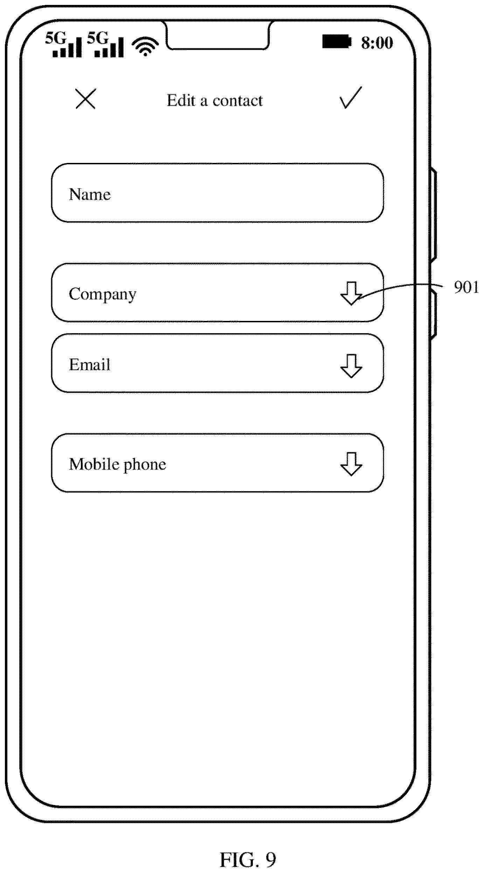

In some embodiments, the contact editing interface shown in FIG. 6 may be replaced with a contact editing interface shown in FIG. 9. On the contact editing interface shown in FIG. 9, a down arrow 901 is further disposed on a right side inside the input box. When receiving a tapping operation based on the down arrow 901 in the "Mobile phone" input box, the first terminal device may display the contact information push interface shown in FIG. 7.

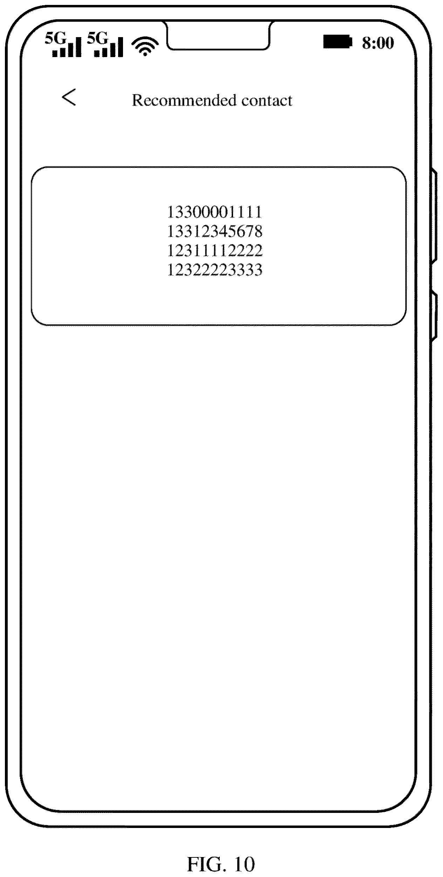

In some embodiments, the contact information push interface shown in FIG. 7 may be replaced with a contact information push interface shown in FIG. 10. Specifically, when receiving a tapping operation for the "Mobile phone" input box, the first terminal device may jump from the contact editing interface shown in FIG. 6 to the contact information push interface shown in FIG. 10. The contact information push interface shown in FIG. 10 does not include any display content on the contact editing interface shown in FIG. 6.

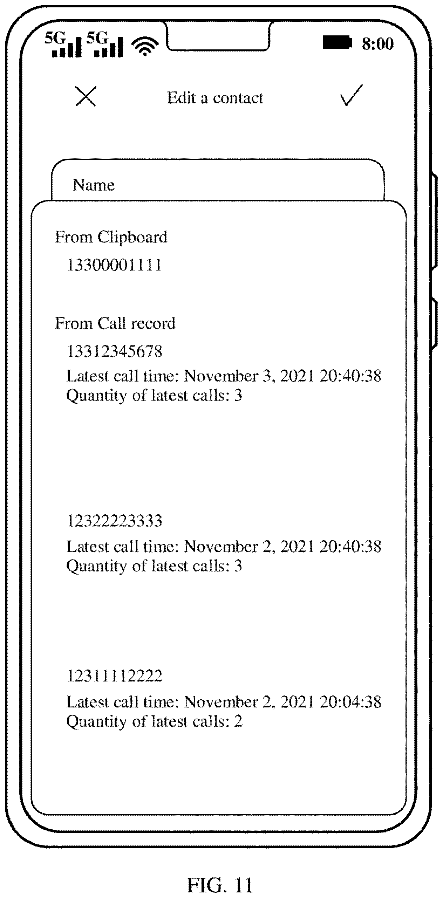

In some embodiments, the contact information push interface shown in FIG. 7 may be replaced with a contact information push interface shown in FIG. 11. The contact information push interface shown in FIG. 11 further includes, in addition to a plurality of phone numbers, a clipboard or call record (that is, source information), a latest call time (that is, time information), and a quantity of latest calls (that is, frequency information) of each phone number. In addition, the plurality of phone numbers included on the contact information push interface shown in FIG. 11 are grouped based on source information of the phone numbers and are sorted based on latest call times and quantities of latest calls. A phone number from the clipboard application is at the top, followed by phone numbers from a call record of a phone application. In addition, the phone numbers from the call record of the phone application are also sorted in descending order of quantities of calls and based on the latest call times (that is, latest call moments) from late to early.

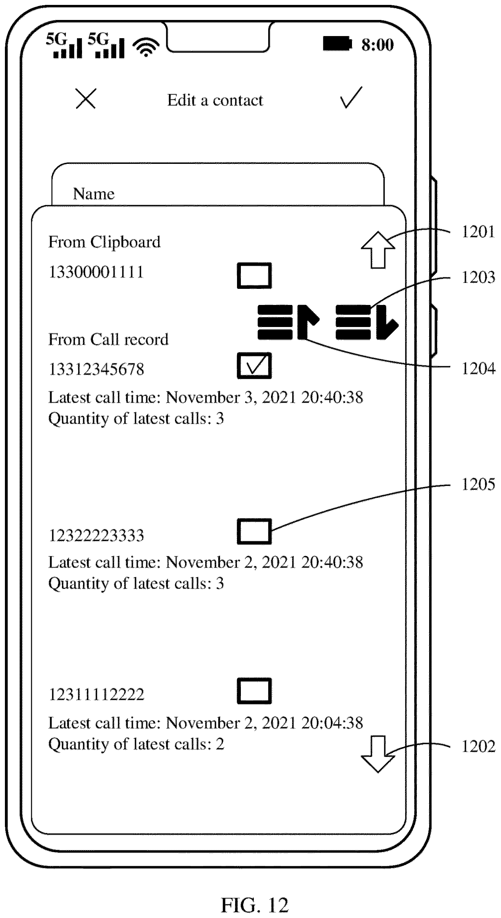

In some embodiments, the contact information push interface shown in FIG. 7 may be replaced with a contact information push interface shown in FIG. 12. Based on the contact information push interface shown in FIG. 11, the contact information push interface shown in FIG. 12 includes an up arrow 1201, a down arrow 1202, a forward sorting button 1203, a reverse sorting button 1204, and a plurality of check boxes 1205. When receiving a tapping operation of the user based on the up arrow 1201, the first terminal device may slide upward to display another phone number after 12311112222. When receiving a tapping operation of the user based on the down arrow 1202, the first terminal device may slide down to display another phone number before 13300001111. When receiving a tapping operation of the user based on the forward sorting button 1203, the first terminal device may sort the phone numbers from the call record based on the latest call times from late to early and in descending order of the quantities of latest calls. When receiving a tapping operation of the user based on the reverse sorting button 1204, the first terminal device may sort the phone numbers from the call record based on the latest call times from early to late and in ascending order of the quantities of latest calls. When receiving a tapping operation of the user based on a check box 1205 corresponding to any phone number (for example, 13312345678), the first terminal device may determine that the phone number is a phone number selected by the user.

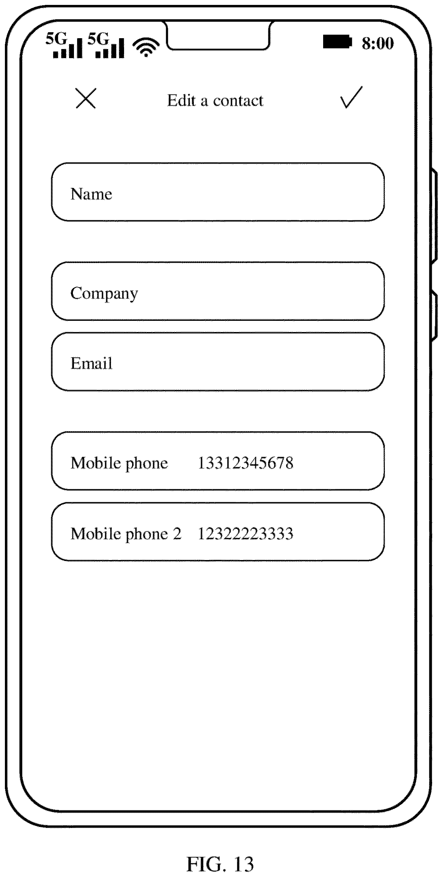

In some embodiments, on the contact information push interface shown in any one of FIG. 7, FIG. 10, FIG. 11, or FIG. 12, after the user selects two phone numbers 13312345678 and 12322223333, a contact editing interface shown in FIG. 13 is displayed. The contact editing interface shown in FIG. 13 includes two phone number type input boxes such as "Mobile phone" and "Mobile phone 2". The "Mobile phone" input box is filled with 13312345678, and the "Mobile phone 2" input box is filled with 12322223333.

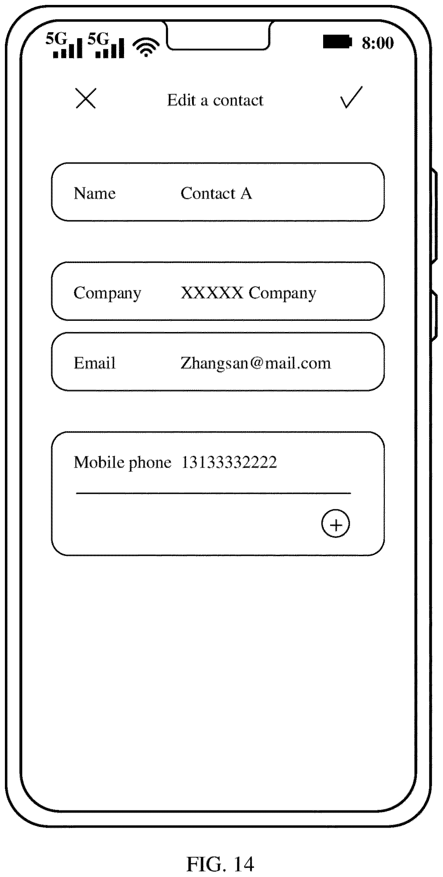

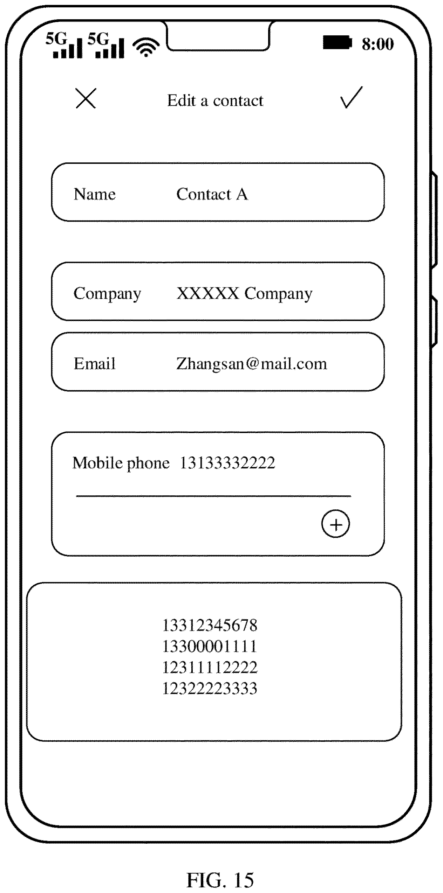

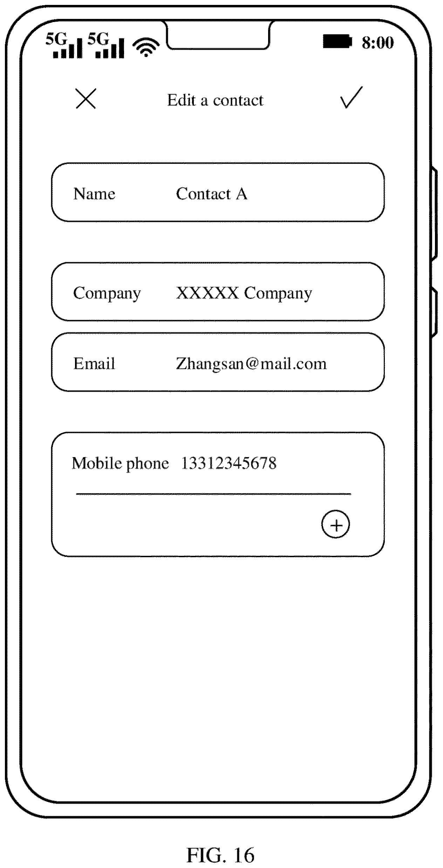

Refer to FIG. 5, FIG. 14, FIG. 15, and FIG. 16 in sequence. Another method for adding contact information is provided, to update existing contact information when an existing contact is updated. The first terminal device may display a contact main interface shown in FIG. 5. When receiving a touch and hold operation based on a contact A included on the contact main interface, the first terminal device displays a contact editing interface shown in FIG. 14. The contact editing interface includes four input boxes corresponding to four information types such as "Name", "Company", "Email", and "Mobile phone", and each input box is filled with contact information. When receiving a tapping operation based on the phone number 13133332222 in the "Mobile phone" input box, the first terminal device may determine that the user replaces an existing phone number in the "Mobile phone" input box, display a contact information push interface shown in FIG. 15, and display, below the "Mobile phone" input box included on the contact information push interface, four phone numbers pushed to the user. When receiving a tapping operation based on the phone number 13312345678, the first terminal device replaces the phone number 13133332222 in the "Mobile phone" input box with 13312345678 selected by the user, to display a contact editing interface shown in FIG. 16.

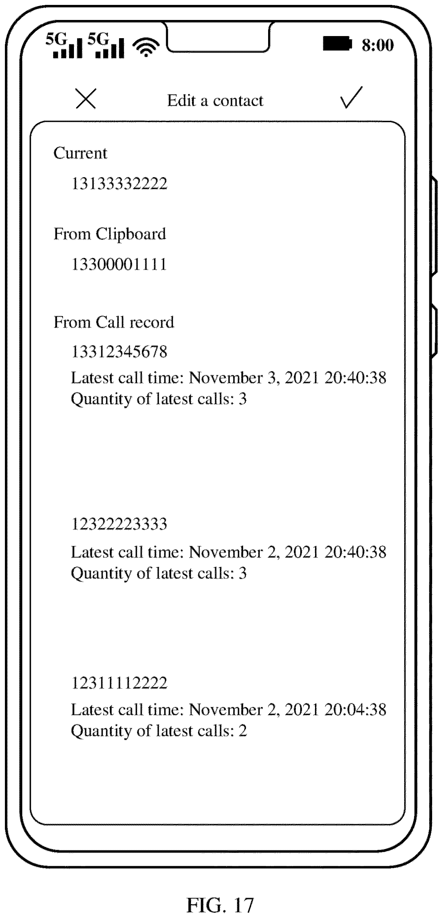

In some embodiments, the contact information push interface shown in FIG. 15 may be replaced with a contact information push interface shown in FIG. 17. On the contact information push interface shown in FIG. 17, the phone number 13133332222 currently filled in the "Mobile phone" input box is further displayed, and the phone number is marked by using text information such as "Current", so that the user determines that 13133332222 is a phone number filled in the "Mobile phone" input box.

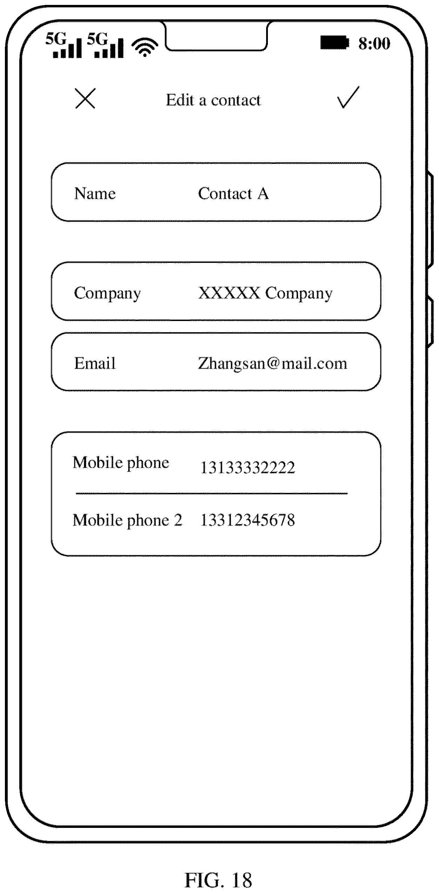

Refer to FIG. 5, FIG. 14, FIG. 15, and FIG. 18 in sequence. Another method for adding contact information is provided, to add new contact information when an existing contact is updated. The first terminal device may display a contact main interface shown in FIG. 5. When receiving a touch and hold operation based on a contact A included on the contact main interface, the first terminal device displays a contact editing interface shown in FIG. 14. The contact editing interface includes four input boxes corresponding to four information types such as "Name", "Company", "Email", and "Mobile phone", and each input box is filled with contact information. When receiving a tapping operation based on "+" in the "Mobile phone" input box, the first terminal device may determine that the user expects to add a phone number, display a contact information push interface shown in FIG. 15, and display, below the "Mobile phone" input box included on the contact information push interface, four phone numbers pushed to the user. When receiving a tapping operation based on the phone number 13312345678, the first terminal device creates a "Mobile phone 2" input box on the contact editing interface shown in FIG. 14, and fills 13312345678 selected by the user in the "Mobile phone 2" input box, to display a contact editing interface shown in FIG. 18, so that the contact editing interface shown in FIG. 18 includes both the original phone number 13133332222 and the newly added phone number 13312345678.

In some embodiments, the contact editing interface shown in FIG. 14 may alternatively be replaced with a contact editing interface similar to that in FIG. 9, and the contact information push interface shown in FIG. 15 may alternatively be replaced with a contact information push interface similar to any one of FIG. 10 to FIG. 12.

Certainly, during actual application, the first terminal device may alternatively trigger the contact editing interface in another manner, and push, based on an input box on the contact editing interface, contact information corresponding to an information type of the input box to the user, or even add the contact information. A manner of triggering the contact editing interface is not limited in this embodiment of this application. If the input box is a blank input box before the contact information is pushed to the user, the first terminal device may push and add the contact information in the manners shown in FIG. 5 to FIG. 8. If the input box is already filled with the contact information before the contact information is pushed to the user, the first terminal device may push and add the contact information in the manners shown in FIG. 5, FIG. 14, FIG. 15, and FIG. 16.

For example, the first terminal device may alternatively trigger, in the manners shown in FIG. 2 and FIG. 3, display of the contact editing interface shown in FIG. 4. Alternatively, if the first terminal device receives a tapping operation of the user based on an "Add to an existing contact" option in FIG. 3, the first terminal device may display the contact main interface shown in FIG. 5, and when receiving a tapping operation of the user based on "Contact A" in FIG. 5, the first terminal device adds 13133332222 in FIG. 3 to "Contact A", to display a contact editing interface similar to that in FIG. 14.

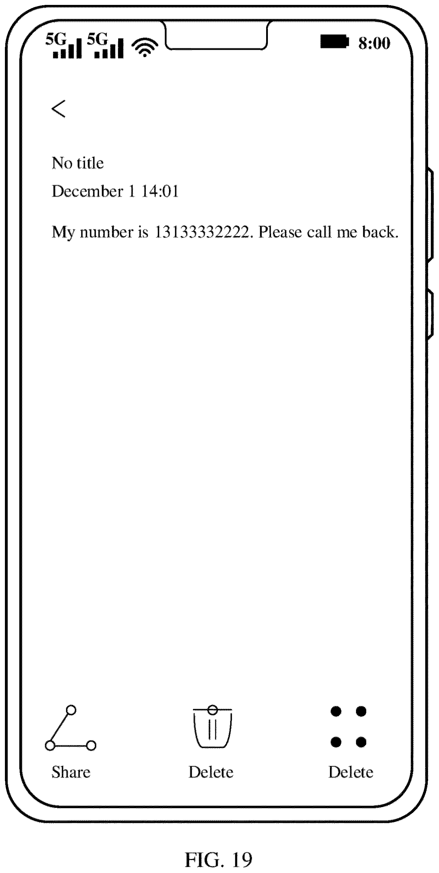

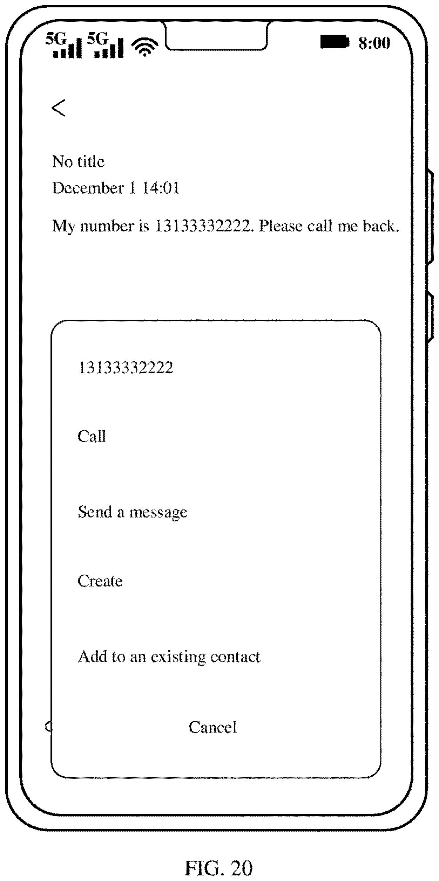

For another example, the first terminal device may display a memo interface shown in FIG. 19. The memo interface includes text information submitted by the user, and the text information includes 13133332222. When receiving a tapping operation of the user based on 13133332222, the first terminal device may display a shortcut jump interface for the phone number, as shown in FIG. 20. The shortcut jump interface includes options "Create" and "Add to an existing contact". When receiving a tapping operation of the user based on the "Create" option, the first terminal device may display the contact editing interface shown in FIG. 4. When receiving a tapping operation of the user based on the "Add to an existing contact" option, the first terminal device may display the contact main interface shown in FIG. 5, and when receiving a tapping operation of the user based on "Contact A" in FIG. 5, the first terminal device adds 13133332222 in FIG. 19 to "Contact A", to display a contact editing interface similar to that in FIG. 14.

It may be understood that the contact editing interface may further include input boxes corresponding to more or less information types. Correspondingly, the first terminal device may push and add contact information of another information type in a manner similar to or the same as that of pushing and adding a phone number.

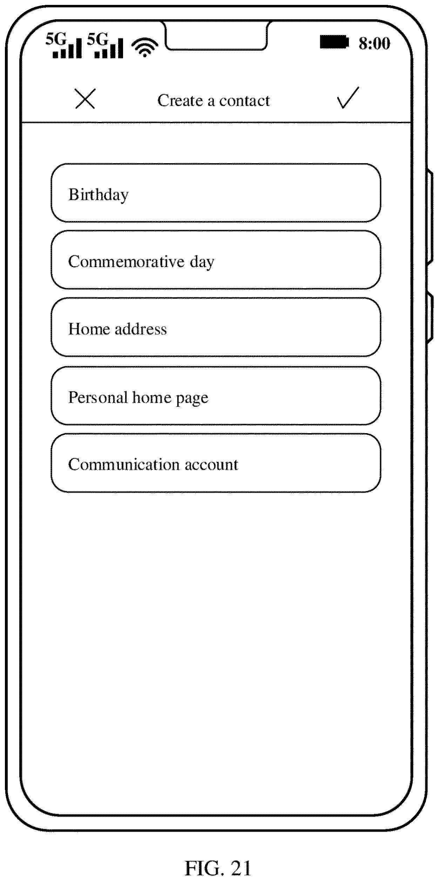

In some embodiments, another contact editing interface may be shown in FIG. 21. The contact editing interface further includes input boxes of a plurality of information types such as a birthday, a commemorative day, a home address, a personal home page, and a communication account.

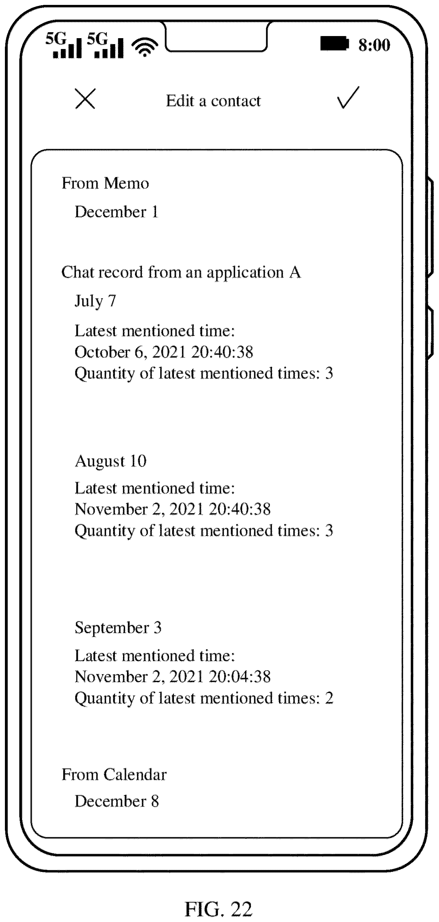

In some embodiments, when receiving a tapping operation of the user based on an input box of a commemorative date or a birthday, the first terminal device may display a contact information push interface shown in FIG. 22. The contact push interface includes four dates: "December 1", "July 7", "August 10", "September 3", and "December 8". The contact push interface further includes: source information corresponding to "December 1" is "Clipboard"; source information corresponding to "July 7" is "a chat record of an application A"; corresponding time information is a latest mentioned time "20:40:38, October 6, 2021"; corresponding frequency information is a latest mentioned quantity "3"; source information corresponding to "August 10" is "a chat record of the application A"; corresponding time information is a latest mentioned time "20:40:38, November 2, 2021", corresponding frequency information is a latest mentioned quantity of times "3 "; source information corresponding to "September 3" is "a chat record of the application A", corresponding time information is a latest mentioned time "20:04:38, November 2, 2021"; corresponding frequency information is a quantity of latest mentioned times "2"; and source information corresponding to "December 8" is: "Calendar". The first terminal device may further fill each date selected by the user in the input box of the commemorative date.

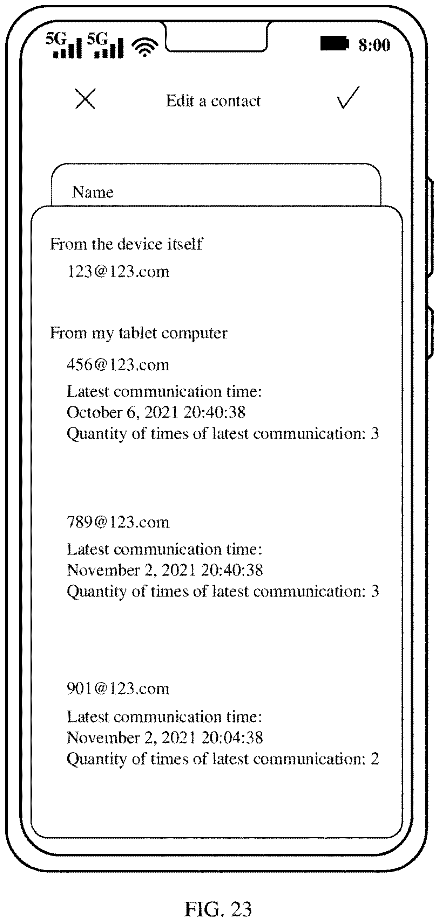

In some embodiments, when receiving a tapping operation of the user based on an input box of an email address, the first terminal device may display a contact information push interface shown in FIG. 23. The contact information push interface includes four email addresses such as "123@123.com", "456@123.com", "789@123.com", and "901@123.com". The contact push interface includes: source information corresponding to "123@123.com" is the first terminal device; source information corresponding to "456@123.com" is my tablet computer; corresponding time information is a latest communication time "20:40:38, October 6, 2021"; corresponding frequency information is a quantity of times of latest communication "3"; source information corresponding to "789@ 123.com" is my tablet computer; corresponding time information is a latest communication time "20:40:38, November 2, 2021"; corresponding frequency information is a quantity of times of latest communication "3"; source information corresponding to "901@ 123.com" is my tablet computer; corresponding time information is a latest communication time "20:04:38, November 2, 2021"; and corresponding frequency information is a quantity of times of latest communication "2". The first terminal device may further separately add each email address selected by the user to the input box of the email address. In some embodiments, source information displayed by the first terminal device may further include a specific application in the first terminal device that the email address is from, or a specific application in my tablet computer that the email address is from.

Similarly, when receiving, based on the input box corresponding to the home address, a tapping operation of the user, the first terminal device may also display a plurality of geographical addresses to the user on the contact information push interface, or may add a geographical address selected by the user to the input box corresponding to the home address. Alternatively, when receiving, based on the input box corresponding to the personal home page, a tapping operation of the user, the first terminal device may also display a plurality of network addresses to the user on the contact information push interface, or may add a network address selected by the user to the input box corresponding to the personal home page. Alternatively, when receiving, based on the input box corresponding to the communication account, a tapping operation of the user, the first terminal device may also display a plurality of communication accounts to the user on the contact information push interface, or may add a communication account selected by the user to the input box corresponding to the communication account.

It should be noted that, for different information types, the first terminal device may obtain contact information of the information type from different applications. For example, the first terminal device may obtain a phone number from a clipboard application and a telephone application, may obtain an email address from an email application, may obtain a date corresponding to a commemorative date or a birthday from a clipboard application, a calendar application, and a communication application A, may obtain a geographical address corresponding to a home address from a trip application, a shopping application, and a navigation application, and may obtain a network address corresponding to a personal home page from a browser and a social application.

It should be further noted that, in this embodiment of this application, an interaction manner between the first terminal device and the user is described only by using a tapping operation and a touch and hold operation, and the interaction manner is not limited. It may be understood that during actual application, the user may also perform another type of operation to achieve an effect that is the same as or similar to that of the tapping operation or the touch and hold operation.

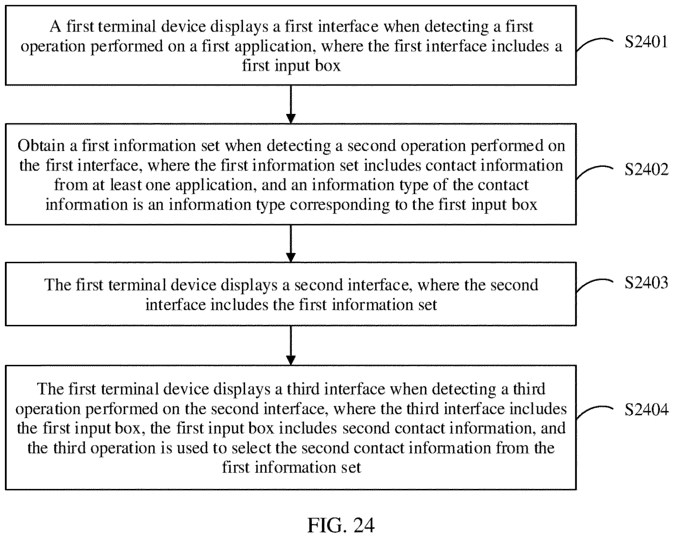

FIG. 24 is a flowchart of a method for pushing contact information according to an embodiment of this application. It should be noted that the method for pushing contact information provided in this embodiment of this application may be applied to a second application in a first terminal device. In some embodiments, the second application may be an application that can maintain contact information. For example, the second application may be an application that is used to record a contact, such as an address book application, a contacts application, or a phone book application. In some other embodiments, the second application may further perform communication based on the contact information. For example, the second application may be a social application such as a phone application or an email box application. It should also be noted that the method is not limited to a specific sequence described in FIG. 24 and the following descriptions. It should be understood that, in other embodiments, sequences of some steps in the method may be interchanged based on an actual requirement, or some steps in the method may be omitted or deleted. The method includes the following steps.

S2401: The first terminal device displays a first interface when detecting a first operation performed on a first application, where the first interface includes a first input box.

The first operation is used to edit contact information in the second application. When the first terminal device detects the first operation, to facilitate a user adding a contact or updating an added contact, the first terminal device may display the first interface in response to the first operation, so that the user can edit the contact information in the second application on the first interface.

It should be noted that an operation type of the first operation is not limited in this embodiment of this application. For example, the first operation may include a tapping operation, a touch and hold operation, a slide operation, a voice input, or the like.

In some embodiments, the first interface may include the contact editing interface shown in FIG. 4, FIG. 6, FIG. 9, FIG. 14, or FIG. 21.

In some embodiments, the second application and the first application may be a same application, and the first operation may trigger the first terminal device to perform interface jumping in the same application, so as to display the first interface.

For example, both the first application and the second application are contact applications. The contact main interface shown in FIG. 5, the contact editing interface shown in FIG. 6, the contact editing interface shown in FIG. 9, and the contact editing interface shown in FIG. 14 are interfaces in the contacts applications. When receiving a tapping operation of the user based on "+" on the contact main interface in the contacts application, the first terminal device may jump inside the contacts application, so as to display a contact editing interface in the contacts application.

In some other embodiments, the second application and the first application may also be different applications, and the first operation may trigger the first terminal device to jump from the second application to the first application and display the first interface.

For example, the second application is a contacts application, and the first application is a phone application. Both the call record interface shown in FIG. 2 and the number details interface shown in FIG. 3 are interfaces in the phone application, and the contact editing interface shown in FIG. 4 is an interface in the contacts application. When receiving a tapping operation based on the "Create" or "Add to an existing contact" option on the number details interface in the phone application, the first terminal device may jump to the contact editing interface in the contacts application.

For another example, the second application is a contacts application, the first application is a memo application, the memo interface shown in FIG. 19 and the shortcut jump interface shown in FIG. 20 are interfaces in the memo application, and the contact editing interface is an interface in the contacts application. When receiving a tapping operation based on the "Create" or "Add to an existing contact" option on the shortcut jump interface in the memo application, the first terminal device may jump to the contact editing interface in the contacts application.

The first interface may include a plurality of input boxes of different information types, used to receive contact information entered by the user. In some embodiments, a same information type may correspond to more than one input box, so that the user enters more than one piece of contact information of a same information type. The first input box may be any input box on the first interface. In some embodiments, the information type of the first input box may be a phone number, an email address, a geographical address, a website address, a commemorative date, a communication account, a bank card account, or a company name. Certainly, during actual application, the information type of the first input box may also be another information type. A specific information type of the information type of the first input box is not limited in this embodiment of this application.

In some embodiments, the first input box on the first interface may be a blank input box, for example, the "Company" input box and the "Email" input box included on the contact editing interface shown in FIG. 4, FIG. 6, or FIG. 9, for example, the "Mobile phone" input boxes in FIG. 6 and FIG. 9, and the input boxes in FIG. 21. In some other embodiments, the first input box on the first interface is an input box filled with contact information, for example, the "Mobile phone" input box in FIG. 4 and the input boxes in FIG. 14.

In some embodiments, the first operation is an operation of adding a contact, and the first input box on the first interface may be a blank input box, that is, does not include any person information. For example, the first operation may be a tapping operation performed by the first terminal device based on "+" on the contact main interface shown in FIG. 5. The "Mobile phone" input box on the contact editing interface shown in FIG. 6 is a blank input box. In some other embodiments, the first operation is an operation of updating an added contact, and the first input box on the first interface may include first contact information. For example, the first operation may be a touch and hold operation performed by the first terminal device based on "Contact A" on the contact main interface shown in FIG. 5. The "Mobile phone" input box on the contact editing interface shown in FIG. 14 includes the phone number 13133332222.

S2402: Obtain a first information set when detecting a second operation performed on the first interface, where the first information set includes contact information from at least one application, and an information type of the contact information is an information type corresponding to the first input box.

The second operation may be used to trigger the first terminal device to push the contact information to the user based on the first input box. It can be learned from the foregoing that the contact may include contact information of a plurality of information types such as a phone number and an email address, and the information type corresponding to the first input box is any one of the plurality of information types. Therefore, if receiving the second operation performed on the first interface, the first terminal device may respond to the second operation to obtain the first information set, where the first information set may include the contact information that is from at least one application, and the information type of the contact information is the information type corresponding to the first input box.

It should be noted that an operation type of the second operation is not limited in this embodiment of this application. For example, the second operation may include a tapping operation, a touch and hold operation, a slide operation, a voice input, or the like.

In some embodiments, the first terminal device may receive the second operation based on the first input box. For example, when the first interface includes the contact editing interface shown in FIG. 4, FIG. 6, FIG. 14, or FIG. 21, the second operation may include a tapping operation, a double-tapping operation, or a touch and hold operation on the first input box.

It should be noted that, because the user may also want to directly and manually enter the contact information, the second operation may be different from a fourth operation used to directly enter the contact information into the first input box. For example, the second operation is a touch and hold operation for the first input box, and the fourth operation is a tapping operation for the first input box. In this case, when receiving the second operation based on the first input box, the first terminal device may push the first information set to the user in the manner provided in this embodiment of this application, and when receiving the fourth operation based on the first input box, the first terminal device may receive contact information entered by the user.

In some embodiments, the second operation may be an operation of creating contact information. For example, the second operation may be a tapping operation for "+" on the contact editing interface shown in FIG. 14.

In some embodiments, the second interface includes a push button corresponding to the first input box, and the first terminal device may receive the second operation based on the push button. The push button may be set in the first input box, or may be set outside the first input box, and a shape of the push button may be an arrow, a circle, or an inverted triangle. For example, on the contact editing interface shown in FIG. 9, the push button is a down arrow set on the right side of the input box. Certainly, during actual application, the push button may alternatively be disposed at another position on the second interface, and the shape of the push button may also be another shape. The position and the shape of the push button are not limited in this embodiment of this application.

In some embodiments, the first information set may include at least a part of contact information in the second information set, and an information type of the contact information included in the second information set is the information type corresponding to the first input box. The first terminal device may obtain the second information set from a preset API of the at least one application.

The at least one application may include any application in the first terminal device. When a quantity of the at least one application is larger, the first terminal device obtains more data sources of the first information set, and a possibility of pushing contact information that meets a user requirement to the user is higher. For example, at a moment, the user accidentally opens an application that is seldom used, so that application data of the application includes one piece of contact information. At another moment, the user thinks that the contact information that has been used is relatively important, and expects to add the contact information. However, at a current moment, the user may only remember that the contact information has been used or seen in the first terminal device, but does not know that the contact information is used or seen in which application, and does not know how to obtain the contact information. In this embodiment of this application, the first terminal device may obtain the contact information from the application data and push the contact information to the user. For the user, difficulty in obtaining the contact information is greatly reduced, and efficiency of pushing the contact information and user experience are improved.

The application data of the application may be data that belongs to the application or is created by the application.

In some embodiments, the at least one application includes a social application, and correspondingly, the application data includes at least one of a communication record, for example, a call record, an SMS message information record, an email exchange record, and a chat record.

In some embodiments, the at least one application includes a clipboard application, and correspondingly, the application data includes clipboard data that is obtained by the user by copying before the current moment.

In some embodiments, the at least one application includes a note application such as a calendar application, a note pad application, a memo application, a notebook application, or a diary application. Correspondingly, the application data includes note data such as note pad data, memo data, or a diary submitted by the user.

In some embodiments, the at least one application includes a travel application, a shopping application, a map application, or a navigation application. Correspondingly, the application data includes at least one of a geographical address list favored by the user, a geographical address search record, a geographical record use record, or the like.

In some embodiments, when the information types corresponding to the first input box are different, the at least one application program that obtains the contact information of the information type may also be different. For example, the information type of the first input box is a phone number, and the at least one application includes at least one of a phone application, a clipboard application, and a memo application. For another example, the information type of the first input box is an email address, and the at least one application includes at least one of an email box application, a clipboard application, and a memo application. For another example, the information type of the first input box is a commemorative date or a birthday, and the at least one application includes at least one of a calendar application, a clipboard application, and a memo application.

Certainly, during actual application, the at least one application may further include more or fewer applications. An application type of the at least one application is not limited in this embodiment of this application.

It should be noted that the at least one application may include the first application and/or the second application.

In some embodiments, the first terminal device may obtain the contact information from the application, or may obtain the application data from the application, and then obtain the contact information from the application data. When the first terminal device obtains the contact information from the application, coupling between applications can be reduced, and application data leakage can be reduced. When the first terminal device obtains the application data from the application, and then obtains the contact information from the application data, a manner of obtaining the contact information may be more flexible. This helps improve accuracy and reliability of obtaining the contact information.

The first terminal device may obtain the contact information or the application data by using a preset API of each application. In addition, in some embodiments, the first terminal device may obtain access authorization from the application before obtaining the contact information or the application data from the application.

In some embodiments, the first terminal device may provide, by using a preset API interface of an application, a field related to contact information for the application, so as to obtain information such as contact information that may be included in application data of the application. For example, a phone number is obtained from a call record of a phone application. The call record may include a plurality of fields such as the phone number, a number home location, a latest call time, and a quantity of latest calls. The first terminal device may obtain the phone number from the phone number field.

In some embodiments, if the application data of the application includes text information submitted by the user, for example, a memo item submitted by the user in a memo application, or a text message sent in a communication application, the first terminal device may identify, from the application data based on a text feature corresponding to the information type of the first input box, the contact information corresponding to the information type.

Contact information of different information types may have different text features. A phone number is used as an example, and the phone number may be consecutive numbers of a specific length. An email address of an email box is used as an example, and the email address may include a user-defined character string, "@", a domain name, and the like. A geographical address is used as an example, and the geographical address may include specific characters such as a province, a city, and a street. Therefore, the first terminal device may identify contact information of a corresponding information type from the application data based on a text feature corresponding to each information type.

Obtaining a phone number from the clipboard application is used as an example. The first terminal device may provide, for the clipboard application by using a preset API of the clipboard application, a field used to obtain text information submitted by the user, to obtain the text information from the clipboard application, and then extract the phone number from the text information based on a text feature of the phone number. Alternatively, the first terminal device may directly provide the phone number field for the clipboard application by using the preset API of the clipboard application, to directly obtain the phone number from the clipboard application by using the preset API interface.

Certainly, during actual application, the first terminal device may identify, from the application data in another manner, the contact information corresponding to the first information type. A manner in which the first terminal device identifies, from the application data, the contact information corresponding to the first information type is not limited in this embodiment of this application.

In some embodiments, the first terminal device may obtain, from at least one application, at least one of source information, time information, and frequency information corresponding to each piece of contact information.

The source information indicates an application and/or a device to which the contact information belongs, that is, a source of the contact information. For example, the source information may include at least one of a device identifier, an application ID, an application name, an application package name, and the like.

The time information may indicate a time corresponding to the contact information in the application data of the application to which the contact information belongs. The time information may be corresponding to the type of the application and/or the type of the application data. When a time indicated by the time information is closer to a current moment, it is more likely that the user does not add the contact information currently. For example, for a social application, if the application data includes a call record, the time information may be a latest call moment; or if the application data includes a chat record, the time information may be a moment at which a message including the contact information is generated. For another example, the application is a calendar application, and the application data includes schedule data submitted by the user for a plurality of dates. In this case, the time information may be a moment at which the first terminal device receives the schedule data that includes the contact information and that is submitted by the user, or may be a date, in the calendar application, of the schedule data that includes the contact information.

The frequency information may indicate a frequency at which the contact information appears in the application data of the application to which the contact information belongs within preset duration. The frequency at which the contact information appears in the application data of the application to which the contact information belongs may indicate practicability or importance of the contact information for the user. When the frequency is higher, the contact is more practical or more important to the user, and correspondingly, it is more likely that the user currently needs to add the contact information. It should be noted that the frequency information may be corresponding to the type of the application and/or the type of the application data. For example, for a social application, if the application data includes a call record, the frequency information may be a quantity of calls; or if the application data includes a chat record, the frequency information may be a quantity of messages including the contact information. For another example, if the application is a calendar application, and the application data includes schedule data submitted by the user for a plurality of dates, the frequency information may be a quantity of schedule data including the contact information.

It should be noted that the preset duration may be one week, one month, or the like. Certainly, during actual application, the preset duration may also be another value. A value of the preset duration is not limited in this embodiment of this application.

It should be further noted that, neither a quantity of pieces of contact information obtained by the first terminal device from each application nor a quantity of pieces of contact information included in the first information set is limited in this embodiment of this application.

In some embodiments, when obtaining the contact information from the at least one application, the first terminal device may further determine whether the obtained contact information is added contact information. If yes, the first terminal device ignores the contact information; otherwise, the first terminal device retains the contact information. That is, the first terminal device may obtain, from the at least one application, the contact information that is corresponding to the first information type and that is not added, so that the first information set includes only the contact information that is not added, thereby improving accuracy of pushing the contact information.

In some embodiments, the first terminal device may group, based on source information corresponding to each piece of contact information included in the first information set, the contact information included in the first information set, and/or sort, based on at least one of the time information and the frequency information corresponding to each piece of contact information, the contact information included in the first information set, to obtain a grouped and/or sorted first information set.

The contact information included in the first information set is grouped based on the source information corresponding to each piece of contact information included in the first information set, so that contact information corresponding to same source information in the grouped first information set is in a same group. The contact information included in the first information set is sorted based on at least one of the time information and the frequency information corresponding to each piece of contact information, so that the contact information in the sorted first information set is sorted in a specific order.

It should be noted that, when the first terminal device sorts, based on a plurality of sorting conditions, contact information included in the first information set, an arrangement order of the contact information may be determined based on one sorting condition. If an arrangement order of a plurality of pieces of contact information cannot be determined based on the sorting condition, another sorting condition is obtained to determine the arrangement order of the plurality of pieces of contact information, ..., and so forth, until the contact information included in the first information set is sorted.

In some embodiments, the first terminal device may first group the first information set based on the source information corresponding to the contact information, and then sort the grouped first information set based on the time information and the frequency information, to obtain the grouped and sorted first information set.

For example, the first information set includes a plurality of phone numbers: 13312345678, 13300001111, 12311112222, and 12322223333. An application to which 13300001111 belongs is a clipboard application, and time information and a frequency related to 13300001111 are not obtained, and an application to which 13312345678, 12311112222, and 12322223333 belong is a phone application. Time information (for example, a moment of a latest call) corresponding to 13312345678 is November 3, and a frequency is 3. Time information corresponding to 12311112222 is November 2, and a frequency is 2. Time information corresponding to 12322223333 is November 2, and a frequency is 3. The first terminal device first groups the first information set based on the application to which the contact information belongs, to obtain 13300001111, 12311112222, 13312345678 and 12322223333, so that phone numbers belonging to a same application are arranged together. Then, the first terminal device sorts three phone numbers belonging to the phone application based on time information from late to early, and the first information set obtained after the sorting is 13300001111, 13312345678, 12311112222 and 12322223333, and then sorts phone numbers having same time information in descending order of frequency, the finally obtained first information set is 13300001111, 13312345678, 12322223333 and 12311112222.

It should be noted that, during actual application, the first terminal device may further obtain more or less other information related to the contact information as a sorting condition, to sort the contact information included in the first information set. In addition, it should be noted that a priority of a sorting condition selected by the first terminal device for sorting the contact information is not limited in this embodiment of this application.

In some embodiments, the first information set includes at least a part of contact information in a third information set, and an information type of the contact information included in the third information set is the information type corresponding to the first input box. The first terminal device may establish a connection to a second terminal device, and send a contact information obtaining request to the second terminal device. The contact information obtaining request carries the information type corresponding to the first input box. When receiving the contact information obtaining request, the second terminal device may obtain the third information set based on a similar manner in which the first terminal device obtains the contact information, and send the third information set to the first terminal device. Correspondingly, the first terminal device may receive the third information set sent by the second terminal device. That is, the first terminal device may obtain the contact information from another terminal device other than the first terminal device. When the user has a plurality of terminal devices, the plurality of terminal devices may not be installed with a same application, and correspondingly, different terminal devices may include different contact information. Therefore, the terminal device may obtain the contact information in a cross-device manner. This can further increase a data source of the contact information, and reduce complexity and efficiency of obtaining the contact information by the user.

For example, the user has two terminal devices: a mobile phone and a tablet computer. The mobile phone is mainly used to make a call, and contact information mainly includes a phone number. The tablet computer is mainly used to receive and send an email, and contact information mainly includes an email address. Therefore, when the user needs to add contact information of an email address type to the mobile phone, if the mobile phone obtains the contact information from the mobile phone, only a small quantity of contact information may be obtained, or it is difficult to obtain contact information that is useful to the user. Therefore, it is difficult to push the contact information that is satisfied by the user to the user. However, if the mobile phone obtains the contact information from the tablet computer, it is also possible to push the satisfied contact information to the user, thereby improving user experience.

In some embodiments, the first terminal device and the second terminal device may be terminal devices in a same local area network, or the first terminal device and the second terminal device may be terminal devices corresponding to a same user identifier.

In some embodiments, after obtaining the third information set from the second terminal device, the first terminal device may delete contact information that is currently added by the first terminal device and that is included in the third information set, to obtain a new third information set.

In some embodiments, the first information set may include at least some contact information in the second information set and at least some contact information in the third information set.

In some embodiments, to make a manner of obtaining the contact information more flexible, so that the user can perform personalized configuration on the manner of obtaining the contact information, and further improve accuracy of pushing the contact information, the first terminal may display a fourth interface to the user. The fourth interface may include at least one configuration option indicating a push rule for pushing the contact information. When detecting a fifth operation corresponding to any configuration option, the first terminal device configures the configuration option. Correspondingly, the first terminal device may obtain and push the contact information based on the push rule indicated by the at least one configuration option.

In some embodiments, the at least one configuration option may include one of an information source option, a time interval option, and a frequency option.

The information source option may be used to describe a source from which the first terminal device obtains the contact information, and the fifth operation may be used to determine at least one information source selected by the user.

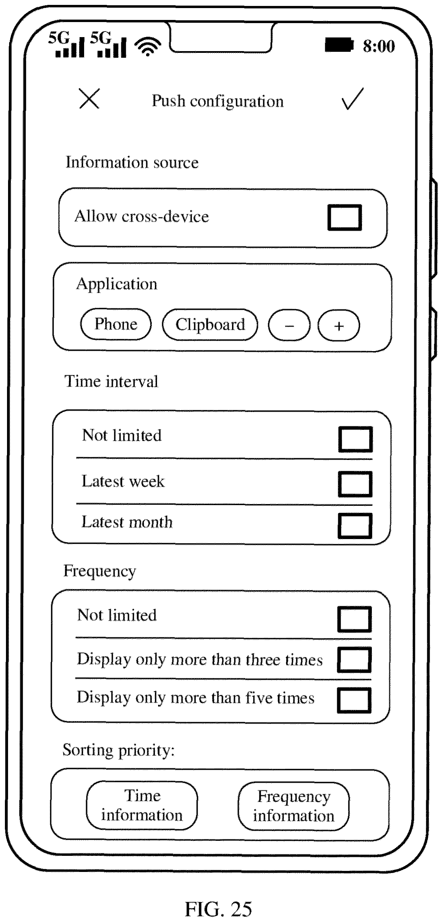

For example, the fourth interface may be a push configuration interface shown in FIG. 25. The fourth interface includes an information source option, and the information source option includes two sub-options: "Allow cross-device" and "Application". A check box is correspondingly set for "Allowing cross-device", and when the first terminal receives a tapping operation (that is, the fifth operation) based on the check box, it may be determined that the contact information may be obtained from another terminal device other than the first terminal device. The "Application" sub-option may be used to configure at least one application used to obtain contact information. Certainly, the "Application" sub-option includes "Phone" and "Clipboard", that is, it indicates that the contact information may be obtained from "Phone" and "Clipboard" currently. In addition, the "Application" sub-option further includes a "-" button and a "+" button. When receiving a tapping operation (that is, a fifth operation) based on the "+" button, the first terminal device may receive a new application submitted by the user. When receiving a tapping operation (that is, a fifth operation) based on the "-" button, the first terminal device may delete an application selected by the user from the "Application" sub-option.

The time interval option may be used to describe a time range based on which the contact information is obtained, and the fifth operation may be used to determine a time range selected by the user.

For example, the push configuration interface shown in FIG. 25 includes a time interval option, where the time interval option includes three options: "Not limited", "Last week", and "Last month", and a check box is correspondingly set for each option. If the first terminal device receives a tapping operation (that is, a fifth operation) of the user based on the check box corresponding to the "Not limited" option, it may be determined that the user does not limit a source of obtaining the contact information. In this case, when the contact information is obtained, the time information corresponding to the contact information may not be used as a basis for determining whether to obtain the contact information. If the first terminal device receives a tapping operation of the user based on a check box corresponding to another time interval option (for example, "Last week" or "Last month"), when the contact information is obtained, the first terminal device may obtain contact information whose time information is within a time interval selected by the user. Correspondingly, time information corresponding to each piece of contact information included in a contact information person set obtained by the first terminal is within the time interval selected by the user.

The frequency option may be used to describe a frequency threshold based on which the contact information is obtained. The fifth operation may be used to determine a frequency threshold selected by the user.

For example, the push configuration interface shown in FIG. 25 includes a frequency option. The frequency option includes three options: "Not limited", "Display only more than three times", and "Display only more than five times", and a check box is correspondingly set for each option. If the first terminal receives a tapping operation (that is, a fifth operation) of the user based on the check box corresponding to the "Not limited" option, it may be determined that the user does not limit a frequency corresponding to the contact information. In this case, when the contact information is obtained, frequency information corresponding to the contact information may not be used as a basis for determining whether to obtain the contact information. If the first terminal receives a tapping operation of the user based on a check box corresponding to another frequency option (for example, "Display only more than three times" or "Display only more than five times"), it may be determined that the user does not limit a frequency corresponding to the contact information. When the contact information is obtained, whether to obtain the contact information may be determined based on a frequency threshold selected by the user, for example, obtaining only the contact information whose frequency is greater than or equal to 3 or obtaining only the contact information whose frequency is greater than or equal to 5.

In some embodiments, the at least one configuration option may include a sorting priority option, and the fifth operation may be used to determine priorities of a plurality of sorting conditions.

For example, the push configuration interface shown in FIG. 25 includes a sorting priority option. The sorting priority option includes two sorting conditions arranged from left to right: time information and frequency information. The leftmost sorting condition has a highest priority, and the rightmost sorting condition has a lowest priority. When receiving a dragging operation (that is, a fifth operation) for any sorting condition, the first terminal device may redetermine a sorting order of the sorting condition based on the fifth operation, that is, determine a priority of the sorting condition. Correspondingly, the first terminal device may preferentially obtain, based on a priority sequence of sorting conditions indicated by the sorting priority option, a sorting condition with a highest priority, sort contact information included in the first information set, then obtain a sorting condition with a second highest priority, sort the contact information, and so forth, until sorting of the contact information included in the contact set is completed.

It should be noted that, during actual application, the fourth interface may include more or fewer configuration options, and the fifth operation may also include another type of operation manner. In this embodiment of this application, a quantity of configuration options and a type of the configuration option included on the fourth interface are not limited, and an operation type of the fifth operation is not limited.

S2403: The first terminal device displays the second interface, where the second interface includes the first information set.

When detecting the second operation, the first terminal device may display the second interface including the first information set, to push, to the user, the contact information that is from the at least one application and that is corresponding to the information type of the first input box, so that the user can select required contact information more conveniently and quickly for adding, thereby simplifying operations of pushing the contact information to the user and adding the contact information by the user, improving efficiency of pushing the contact information to the user and adding the contact information, and improving user experience.

In some embodiments, the second interface may include the contact information push interface shown in FIG. 7, FIG. 10, FIG. 11, FIG. 12, FIG. 15, FIG. 17, FIG. 22, or FIG. 23.

In some embodiments, the first terminal device may add the first information set based on the first interface, to generate the second interface. In other words, in addition to the first information set, the second interface may further include a part of display content of the first interface. In an embodiment, the terminal device may add the first information set to a display area adjacent to the first input box, to obtain the second interface. In other words, on the second interface, an area in which the first information set is located may be adjacent to the first input box.

For example, the first terminal device may add the first information set on the basis of the contact editing interface shown in FIG. 6, to obtain the contact information push interface shown in FIG. 7, FIG. 11, or FIG. 12; or the first terminal device may add the first information set on the basis of the contact editing interface shown in FIG. 14, to obtain the contact information push interface shown in FIG. 11, FIG. 12, FIG. 15, or FIG. 17. On the contact information push interfaces shown in FIG. 7 and FIG. 15, an area in which the first information set is located is adjacent to the "Mobile phone" input box.

In some embodiments, the first terminal may jump from the first interface to the second interface. In other words, the second interface may include the first information set, but does not include any display content on the first interface.

For example, the first terminal device may jump, on the contact editing interface shown in FIG. 6, FIG. 9, or FIG. 14, to the contact information push interface shown in FIG. 10.

In some embodiments, the second interface may include at least one of source information, time information, and frequency information corresponding to each piece of contact information, so that the user determines a source and a usage status of the contact information, and selects the contact information more quickly and accurately, thereby improving efficiency of editing a contact by the user and user experience.

For example, on the contact information push interface shown in FIG. 11, FIG. 12, and FIG. 17, source information, a latest call time (that is, time information), and a quantity of latest calls (that is, frequency information) of each phone number are displayed. On the contact information push interface shown in FIG. 22, source information of each date, a latest mentioned time (that is, time information), and a quantity of latest mentioned times (that is, frequency information) are displayed. On the contact information push interface shown in FIG. 23, source information, a latest communication time (that is, time information), and a quantity of times of latest communication (that is, frequency information) of each email address are displayed.

In some embodiments, it can be learned from the foregoing description that the second interface may include the first information set obtained after grouping and/or sorting, to more intuitively present a source and a usage status of the contact information to the user, so as to select the contact information more quickly and accurately, thereby improving efficiency of editing a contact by the user and user experience.

For example, on the contact information push interfaces shown in FIG. 7 and FIG. 15, phone numbers are not sorted. On the contact information push interfaces shown in FIG. 10,

FIG. 11, FIG. 12, and FIG. 17, phone numbers are grouped based on source information, and are sorted based on a priority order of frequency information and time information. A phone number from the clipboard application is placed before a phone number from a call record. In the phone numbers from the call record, a phone number with a larger quantity of latest calls is placed before a phone number with a smaller quantity of latest calls. In the phone numbers with a same frequency, a phone number with a latest call time is placed before a phone number with an earlier call time. Similarly, on the contact information push interface shown in FIG. 22, dates are also grouped based on source information, and are sorted based on a priority order of frequency information and time information. On the contact information push interface shown in FIG. 23, email addresses are also grouped based on source information, and are sorted based on a priority order of frequency information and time information.

In some embodiments, if the first input box on the first interface is filled with the first contact information, the second interface may further include the first contact information and a mark corresponding to the first contact information, so that the user distinguishes the contact information filled in the first input box from other pushed contact information, to help the user select contact information that needs to be added, and improve user experience.

For example, on the contact editing interface shown in FIG. 14, the "Mobile phone" input box is already filled with 13133332222. Therefore, on the contact information push interface shown in FIG. 17, 13133332222 is displayed, and text information such as "Current" is used to prompt that 13133332222 is a phone number currently filled in the "Mobile phone" input box.

In some embodiments, the second interface may include at least one display control option. When receiving a sixth operation based on any display control option, the first terminal device updates, on the second interface, the displayed contact information or updates a manner of displaying the contact information. That is, the first information set can be displayed based on a manner corresponding to a user operation, so that the user can view or select contact information, thereby improving user experience.

In some embodiments, the at least one display control option may include a slide button, for example, a slider or a slide arrow. When receiving the fifth operation based on the slide button, the first terminal device may slide to display the displayed contact information, so that the user can view most or all of the contact information included in the first information set.

In some embodiments, the at least one display control option may include a sorting button. When receiving, based on the sorting button, a user operation, the first terminal device may update a sorting manner of the contact information included in the first information set, including updating forward sorting to reverse sorting, updating reverse sorting to forward sorting, re-sorting according to a priority order of a specified sorting condition, or the like.

In some embodiments, the at least one display control option may include a check box corresponding to the contact information. When receiving a user operation based on a check box corresponding to any piece of contact information, the first terminal device may determine that the contact information is the contact information selected by the user.

For example, the contact information push interface shown in FIG. 12 includes the up arrow, the down arrow, the forward sorting button, the reverse sorting button, and the check box corresponding to each phone number.

It should be noted that the sixth operation may include a tapping operation or a slide operation. Certainly, during actual application, a third operation box may include an operation of another type. An operation type of the third operation is not limited in this embodiment of this application.

S2404: The first terminal device displays a third interface when detecting the third operation performed on the second interface, where the third interface includes the first input box, the first input box includes second contact information, and the third operation is used to select the second contact information from the first information set.

The third operation may include a tapping operation or a slide operation. Certainly, during actual application, the third operation box may include an operation of another type. An operation type of the third operation is not limited in this embodiment of this application.

In some embodiments, the third interface may include the contact editing interface shown in FIG. 8, FIG. 13, FIG. 16, or FIG. 18.

The first terminal device may add the second contact information to the first input box included on the first interface, to obtain the third interface.

For example, the first terminal device may add, in the "Mobile phone" input box of the contact editing interface shown in FIG. 6, the phone number 13312345678 selected by the user, to obtain the contact editing interface shown in FIG. 8.

In some embodiments, if the first input box on the first interface is filled with the first contact information, the first terminal device may replace the first contact information in the first input box with the second contact information, to obtain the third interface, so that the user can update the contact information more conveniently and quickly. In this way, even if the user selects incorrect contact information before, the user does not need to exit the current contact editing interface to reselect contact information, thereby greatly reducing interaction with the user, improving efficiency of adding contact information, and improving user experience. Alternatively, in some other embodiments, if the first input box on the first interface is already filled with the first contact information, the first terminal device may create a second input box of a same information type as the first input box, and fill the second contact information in the second input box.

For example, the first terminal device may replace 13133332222 in the "Mobile phone" input box on the contact editing interface shown in FIG. 14 with the phone number 13312345678 selected by the user, to obtain the contact editing interface shown in FIG. 16. Alternatively, the first terminal device may retain 13133332222 in the "Mobile phone" input box on the contact editing interface shown in FIG. 14, create a "Mobile phone 2" input box on the contact editing interface, and add another phone number 13312345678 selected by the user to the "Mobile phone 2" input box, to obtain the contact editing interface shown in FIG. 18.

In some embodiments, the third operation is further used to select third contact information from the first information set. Therefore, the third interface may further include the second input box. Each second input box corresponds to a same information type as the first input box, and each second input box includes the third contact information. That is, the user may add contact information of a same information type in batches for a contact by using the third operation, thereby improving efficiency of adding the contact information.

The first terminal device may add the first contact information to the first input box included on the first interface, create a second input box on the first interface, and add the second contact information to the second input box, to obtain the third interface.

For example, the first terminal device may add, in the "Mobile phone" input box of the contact editing interface shown in FIG. 6, the phone number 13312345678 selected by the user, create the "Mobile phone 2" input box on the contact editing interface, and add, in the "Mobile phone 2" input box, another phone number 13312345678 selected by the user, to obtain the contact editing interface shown in FIG. 13.

In addition, the first terminal device may also receive, based on another input box included on the third interface, other contact information submitted by the user, to complete an operation of adding a contact.

It should be noted that S2404 is an optional step.

In this embodiment of this application, when detecting the first application and the first operation on the contact information, the first terminal device may display the first interface including the first input box, and when detecting the second operation on the first interface, the first terminal device may display the second interface including the first information set. Because contact information included in the first information set comes from at least one application, and an information type of the contact information is corresponding to the first input box, the user can select required contact information more conveniently and quickly for adding, thereby simplifying operations of pushing the contact information to the user and adding the contact information by the user, improving efficiency of pushing the contact information to the user and adding the contact information, and improving user experience.

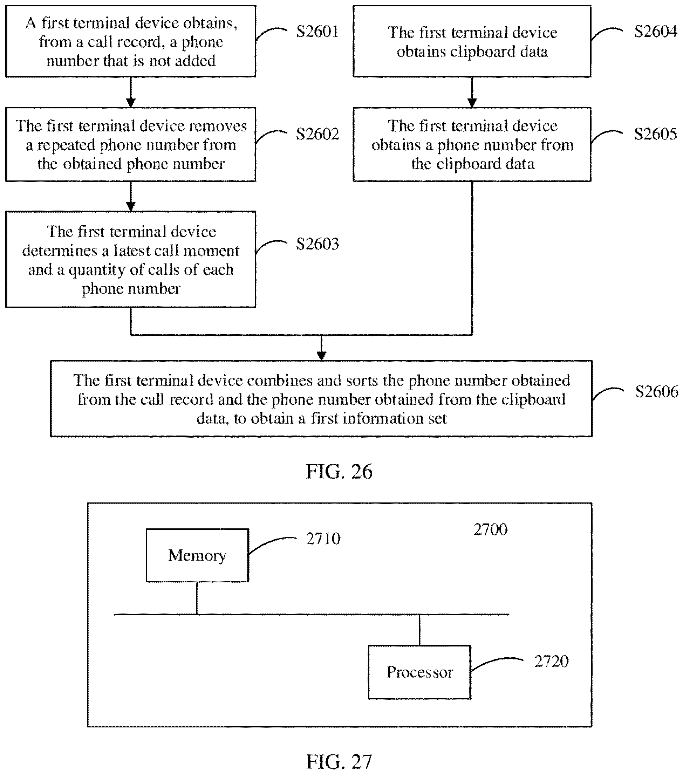

FIG. 26 is a flowchart of a method for obtaining contact information according to an embodiment of this application. The following describes in detail the method for obtaining contact information in S2402 by using an example in which a phone number is obtained from a call record of a phone application and clipboard data of a clipboard application. It should be noted that the method is not limited to a specific sequence described in FIG. 26 and the following descriptions. It should be understood that, in other embodiments, sequences of some steps in the method may be interchanged based on an actual requirement, or some steps in the method may be omitted or deleted. The method includes the following steps.

S2601: The first terminal device obtains, from the call record, a phone number that is not added.

The first terminal device may obtain, from the call record, a phone number that has been used to make a call before a current moment and that is not added.

S2602: The first terminal device removes a repeated phone number from the obtained phone number.

The first terminal device may remove the repeated phone number from the obtained phone number, so that subsequent first information set does not include the repeated phone number, thereby avoiding redundant information in the first information set and improving user experience.

S2603: The first terminal device determines a latest call moment and a quantity of calls of each phone number.

The first terminal device may obtain, from the call record, at least one call moment corresponding to each phone number, compare the at least one call moment corresponding to the phone number, to determine a last call moment of the phone number, and may further determine a quantity of calls of the phone number.

S2604: The first terminal device obtains clipboard data.

The first terminal device may obtain the clipboard data from a cache of the first terminal device.

S2605: The first terminal device obtains the phone number from the clipboard data.

The first terminal device may extract the phone number from the clipboard data based on a text feature corresponding to the phone number.

S2606: The first terminal device combines and sorts the phone number obtained from the call record and the phone number obtained from the clipboard data, to obtain the first information set.

The first terminal device may first sort, based on latest call moments from late to early and in descending order of quantities of calls, the phone numbers obtained from the call record, and then combine the sorted phone number with the phone number obtained from the clipboard, to obtain the first information set.

For a manner in which the first terminal device performs S2601 to S2606, refer to related descriptions in S2402.

Based on a same inventive concept, an embodiment of this application further provides a terminal device. FIG. 27 is a schematic diagram of a structure of a terminal device 2700 according to an embodiment of this application. As shown in FIG. 27, the terminal device 2700 provided in this embodiment includes a memory 2710 and a processor 2720. The memory 2710 is configured to store a computer program. The processor 2720 is configured to perform the method in the foregoing method embodiments when the computer program is invoked.

The terminal device 2700 provided in this embodiment may perform the method embodiment. Implementation principles and technical effects of the terminal device are similar to those of the method embodiments. Details are not described herein again.

Based on a same inventive concept, an embodiment of this application further provides a chip system. The chip system includes a processor, the processor is coupled to a memory, and the processor executes a computer program stored in the memory, to implement the method in the foregoing method embodiments.

The chip system may be a single chip or a chip module including a plurality of chips.

An embodiment of this application further provides a computer-readable storage medium, storing a computer program. When the computer program is executed by a processor, the method in the foregoing method embodiments is implemented.

An embodiment of this application further provides a computer program product. When the computer program product runs on a terminal device, the terminal device is enabled to perform the method in the foregoing method embodiments when executing the computer program product.

When the integrated unit is implemented in the form of the software functional unit and sold or used as an independent product, the integrated unit may be stored in a computer-readable storage medium. Based on such an understanding, in this application, all or some procedures in the methods in the foregoing embodiments may be implemented by using a computer program instructing related hardware. The computer program may be stored in a computer-readable storage medium. When the computer program is executed by a processor, steps in the foregoing method embodiments may be implemented. The computer program includes computer program code, and the computer program code may be in the form of source code, object code, or an executable file, or in some intermediate forms, or the like. The computer-readable storage medium may at least include any entity or apparatus that can carry computer program code to a camera apparatus/terminal device, a recording medium, a computer memory, a read-only memory (read-only memory, ROM), a random access memory (random access memory, RAM), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, the descriptions of each embodiment have respective focuses. For a part that is not described in detail in an embodiment, reference may be made to related descriptions in other embodiments.

Persons of ordinary skill in the art may be aware that, the units and algorithm steps in the examples described with reference to embodiments disclosed in this specification may be implemented by electronic hardware or a combination of computer software and electronic hardware. Whether the functions are performed by hardware or software depends on particular applications and design constraint conditions of the technical solutions. Persons skilled in the art may use different methods to implement the described functions for each particular application, but it should not be considered that the implementation goes beyond the scope of this application.

In embodiments provided in this application, it should be understood that the disclosed apparatus/device and method may be implemented in other manners. For example, the described apparatus/device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

It should be understood that, when used in this specification and the appended claims of this application, the term "include" indicates the existence of the described feature, entity, step, operation, element and/or component, but does not exclude the existence or addition of one or more other features, entities, steps, operations, elements, components and/or a combination thereof.

It should also be understood that the term "and/or" as used in this specification of this application and the appended claims refers to and includes any combination of one or more of items listed in association, as well as all possible combinations.

As used in this specification and the appended claims, the term "if" may be interpreted as "when", "once", "in response to determining that" or "in response to detecting that" depending on a context. Similarly, the phrase "if it is determined that" or "if a [described condition or event] is detected" may be interpreted as meaning "once it is determined that", "in response to determining that", "once the [described condition or event] is detected", or "in response to the detected [described condition or event]" depending on a context.

In addition, in the descriptions of the specification and claims of this application, the terms "first", "second", "third", and the like are merely intended for a purpose of differentiated description, but shall not be understood as an indication or an implication of relative importance.

Reference to "an embodiment", "some embodiments", or the like described in the specification of this application indicates that one or more embodiments of this application include a specific feature, structure, or characteristic described with reference to embodiments. Therefore, the phrases "in an embodiment", "in some embodiments", "in some other embodiments", "in another embodiment", and the like appearing in various places in this specification do not necessarily mean same embodiments, but mean "one or more but not all of embodiments" unless specifically emphasized otherwise. The terms "include", "contain", "have" and their variants mean "including but not limited to" unless specifically emphasized otherwise.

Finally, it should be noted that, the foregoing embodiments are merely intended to describe the technical solutions in this application other than limit this application. Although this application is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions in embodiments of this application.

## Claims

1. A method for pushing contact information, wherein the method is applied to a first terminal device, and the method comprises:
displaying a first interface when detecting a first operation performed on a first application, wherein the first operation is used to edit contact information, and the first interface comprises a first input box; and
displaying a second interface when detecting a second operation performed on the first interface, wherein the second interface comprises a first information set, the first information set comprises contact information from at least one application, and an information type of the contact information is an information type corresponding to the first input box.

2. The method according to claim 1, wherein the first operation is an operation of updating an added contact, and the first input box on the first interface comprises first contact information.

3. The method according to claim 2, wherein the second interface further comprises the first contact information and a mark corresponding to the first contact information.

4. The method according to any one of claims 1 to 3, wherein the second operation is an operation of adding contact information, the first information set comprises second contact information, and the method further comprises:
displaying a third interface when detecting a third operation performed on the second interface, wherein the third interface comprises the first input box, the first input box comprises the second contact information, and the third operation is an operation of selecting the second contact information.

5. The method according to claim 4, wherein the third operation is an operation of selecting the second contact information and third contact information, the third interface further comprises a second input box, an information type corresponding to the second input box is the same as that corresponding to the first input box, and the second input box comprises the third contact information.

6. The method according to any one of claims 1 to 5, wherein the first information set comprises at least a part of contact information in a second information set, an information type of the contact information comprised in the second information set is the information type corresponding to the first input box, and before the displaying a second interface, the method further comprises:
obtaining the second information set from a preset application programming interface API of each application.

7. The method according to any one of claims 1 to 6, wherein the first information set comprises contact information that is not added.

8. The method according to any one of claims 1 to 7, wherein the first information set comprises at least a part of contact information in a third information set, an information type of the contact information comprised in the third information set is the information type corresponding to the first input box, and before the displaying a second interface, the method further comprises:
establishing a connection to a second terminal device;
sending a contact information obtaining request to the second terminal device, wherein the contact information request carries the information type corresponding to the first input box; and
receiving the third information set sent by the second terminal device.

9. The method according to any one of claims 1 to 8, wherein the second interface further comprises at least one of source information, time information, or frequency information corresponding to each piece of contact information comprised in the first information set, the source information indicates an application and/or a device to which the contact information belongs, the time information indicates a corresponding time that is of the contact information and that is in application data of the application to which the contact information belongs, and the frequency information indicates a frequency at which the contact information appears in the application data of the application to which the contact information belongs.

10. The method according to claim 9, wherein before the displaying a second interface, the method further comprises:
grouping, based on the source information, contact information comprised in the first information set, wherein
the second interface comprises the grouped first information set.

11. The method according to claim 9 or 10, wherein before the displaying a second interface, the method further comprises:
sorting, based on at least one of the time information and the frequency information, the contact information comprised in the first information set, wherein
the second interface comprises the sorted first information set.

12. The method according to any one of claims 1 to 11, wherein the information type of the first input box is a phone number, and the at least one application comprises at least one of a phone application, a clipboard application, and a memo application; or
the information type of the first input box is an email address, and the at least one application comprises at least one of an email box application, a clipboard application, and a memo application; or
the information type of the first input box is a commemorative date, and the at least one application comprises at least one of a calendar application, a clipboard application, and a memo application.

13. A terminal device, comprising a memory and a processor, wherein the memory is configured to store a computer program; and when invoking the computer program, the processor is configured to perform the method according to any one of claims 1 to 12.

14. A computer-readable storage medium, storing a computer program, wherein when the computer program is executed by a processor, the method according to any one of claims 1 to 12 is implemented.
